# EUROPEAN PATENT APPLICATION

(11) **EP 4 496 162 A1**
(43) Date of publication of application: **22.01.2025**
(21) Application number: 23186314.3
(22) Date of filing: 19.07.2023
(51) Int. Cl.: H02J 1/10, H02J 1/12, H02J 7/00

(54) **ELECTRICAL POWER SYSTEM, METHOD AND COMPUTER PROGRAM PRODUCT FOR AN AIRCRAFT**

(71) Applicant: APUS Zero Emission GmbH, 15344 Strausberg (DE)
(72) Inventor: Albani, Christoph, 09603 Siebenlehn (DE); Semsch, Martin, 01728 Bannewitz (DE); Ziegan, Stefan, 01129 Dresden (DE)
(74) Representative: Müller-Boré & Partner Patentanwälte PartG mbB

(57) **Abstract**

The present invention relates to a system (10) for electrically powering electrical consumers of an aircraft, the system (10) comprising a first power train system (15) of an aircraft, the first power train system (15) comprising:
- an electrical power supply grid (20) for electrically connecting at least a power generation unit (30), a power consumer (50) and an electrical power storage unit (40), wherein the electrical power supply grid (20) is configured to:
- receive power from the power generation unit (30),
- supply power to the electrical power storage unit (40) generated by the power generation unit (30) or receive power from the electrical power storage unit (40), and
- supply power from the power generation unit (30) and/or from the electrical power storage unit (40) to the power consumer (50); and
- a power train control unit (100) configured to receive at least one input variable being reflective of a state and/or a condition of the electrical power storage unit (40) and to control the power (114) supplied to the electrical power storage unit (40) at least on the basis of the at least one input variable.

Furthermore, a corresponding aircraft propulsion system (12), method and computer program product are provided.

## Description

The present invention relates to a system for electrically powering electrical consumers of an aircraft, the system comprising a first power train system of an aircraft, an aircraft propulsion system including a system for electrically powering electrical consumers of an aircraft, a method for controlling a first power train system of a system for electrically powering electrical consumers of an aircraft and a computer program product.

In commercial aircrafts, wherein kerosene is generally used as a fuel for powering aircraft propulsion systems such as a turbojet engine, electrical consumers on such an aircraft are controlled by monitoring the power consumption of each electrical consumer, adding the monitored power consumption together, and controlling the propulsion system to drive a generator at a necessary level, in order to provide for sufficient electric power to the electrical consumers. Alternative fuel and propulsion systems which may rely on gases such as hydrogen are subject to current studies but are however not yet used in commercial air traffic. Nevertheless, there is a need for efficiently securing a power supply for electrical consumers of an aircraft which may particularly be powered by an alternative fuel and propulsion system.

In view of the above, an object of the present invention is to provide an improved system for electrically powering electrical consumers of an aircraft, in particular of an aircraft with alternative fuel system, and to provide an improved method for controlling a first power train system of a system for electrically powering electrical consumers of an aircraft, as well as to provide a computer program product thereto.

The problem is solved by the subject-matter of the independent claims. Particular embodiments are defined by the dependent claims.

According to an aspect, a system for electrically powering electrical consumers of an aircraft is provided, the system comprising a first power train system of an aircraft, the first power train system comprising:
- an electrical power supply grid for electrically connecting at least a power generation unit, a power consumer and an electrical power storage unit, wherein the electrical power supply grid is configured to:
   - receive power from the power generation unit,
   - supply power to the electrical power storage unit generated by the power generation unit or receive power from the electrical power storage unit, and
   - supply power from the power generation unit and/or from the electrical power storage unit to the power consumer; and
   - a power train control unit configured to receive at least one input variable being reflective of a state and/or a condition of the electrical power storage unit and to control the power supplied to the electrical power storage unit at least on the basis of the at least one input variable.

Owing to the system for electrically powering electrical consumers of an aircraft, wherein the power supplied to the electrical power storage unit is controlled on the basis of the at least one input variable being reflective of the state and/or condition of the electrical power storage unit, the system is advantageously simplified in that the power consumers may be supplied with power without necessarily directly monitoring and/or feeding back a power consumption of the power consumer, particularly without necessarily directly monitoring and/or feeding back a power consumption of each power consumer of a plurality of power consumers.

In other words, the system for electrically powering electrical consumers of an aircraft advantageously provides for securely and efficiently powering a power consumer of an aircraft, wherein the power to be supplied to the electrical power storage unit is controlled on the basis of a variable which is indirectly dependent on the power consumed by or supplied to the power consumer.

In still other words, since complex power train system have to deal with reliability and are subject to exhausting certification processes, the system for electrically powering electrical consumers of an aircraft as provided herein advantageously allows to simplify and passivate components of the power train system, as well as their interaction.

Specifically, since the power consumer is powered by at least one of the power generation unit and the electrical power storage unit, while the electrical power storage unit is configured to receive power from the electrical power supply grid and/or supply power to the electrical power supply grid, the power to be supplied to the electrical power storage unit being controlled on the basis of a variable which is reflective of the state and/or condition of the electrical power storage unit allows for managing the power to be generated, supplied, and/or stored without requiring to monitor a specific power consumption of the power consumer by the power train control unit and/or without requiring to feeding back the specific power consumption of the power consumer to the power train control unit.

However, since the electrical power storage unit is at least partially or temporarily configured to supply power to the electrical power supply grid, and thus to the power consuming power consumer, the system allows for controlling the power to be supplied to the electrical power storage unit indirectly dependent on the power consumed by or supplied to the power consumer.

Accordingly, there is provided an improved self-regulating voltage and energy management system for an aircraft, being particularly fail-safe.

In other words, compared to conventional aircraft energy management systems, wherein power consumers are monitored and fed back to a central energy management control unit, in order to control a power to be generated and supplied to an energy grid, the above mentioned aspects and the particular embodiments as described further below provide for a decentralized voltage and energy management system for an aircraft, wherein the number of input variables for controlling the power management by the power train control unit, particularly for controlling the power supplied to the electrical power storage unit by the power train control unit, is advantageously reduced.

In particular embodiments, the power train control unit may be configured to limit the power to be supplied to the electrical power storage unit at least on the basis of the at least one input variable. The limited power to be supplied to the electrical power storage unit may for example be a threshold power, particularly a threshold charging current, up to which damage to the electrical power storage unit can be avoided. Said threshold power may in turn particularly be determined by the power train control unit, on the basis of said at least one input variable.

This advantageously provides for a power train system of an aircraft allowing to reliably and particularly passively power electrical consumers via a power generation unit and an electrical power storage unit, while reducing the risk of damage to the electrical power storage unit.

In particular embodiments, the power train control unit may be a separate control unit, at least including a memory and/or one or more processors. In further particular embodiments, the power train control unit may integrated to a converter of one or more converters, such as high-voltage converters or low-voltage converters, connected to the electrical power supply grid. Particularly, the power train control unit may be integrated into a high-voltage DC/DC converter which intermediary connects the power generator to the electrical power supply grid.

In particular embodiments, the input variables for controlling the power supplied to the electrical power storage unit by the power train control unit do not include the power consumed by the power consumer. In other words, in particular embodiments, the power train control unit may be configured to disregard the power consumed by the power consumer for controlling the power to be supplied to the electrical power storage unit.

Because particularly feeding back the power consumed by the power consumer can be avoided, the particular embodiments advantageously allow for reducing the communication load between the respective units connected to the electrical power supply grid, which in turn allows for efficiently controlling the power train system. Therefore, compared to conventional centralized aircraft control systems, the particular embodiments allow for controlling the power train system in rather decentralized manner, wherein the power train system suffers from a reduced communication load, compared to conventional centralized aircraft control systems. Accordingly, the present power train system provides for a control system with improved reliability, because the possibility of communication errors is advantageously reduced.

In particular embodiments, the at least one input variable may be an input variable different from the power consumed by or supplied to the power consumer, in particular an input variable different from the power consumed by or supplied to an electrical consumer.

In particular embodiments, the power train control unit may be configured to treat or handle power supplied to the power consumer as an unknown variable, in particular as a disturbance to the electrical power supply grid.

That is, the power train control unit may be configured to treat or handle the power supplied to or consumed by the power consumer as an unknown, particularly regardless of the actual power supplied to the power consumer, and furthermore in particular regardless of a potentially measured power supplied to the power consumer, in case the power supplied to the power consumer is measured.

Controlling the power to be supplied to the electrical power storage unit regardless of the actual power consumed by or supplied to the power consumer particularly provides for improved simplification of the system for electrically powering electrical consumers of an aircraft, which in turn increases the security and reliability for supplying sufficient power to the power consumer.

Specifically, since the number of monitored, measured and/or fed back units is reduced, potential points of failure which may suffer faulty measurement or faulty communication are reduced accordingly. Therefore, the power to be supplied to the electrical power storage unit may be controlled in a way which is less likely to cause electrical overshoots or an undersupply which respectively harm or damage the electrical power supply grid and the respective power generating unit, electrical power storage unit or power consuming units connected to it. That is, since the power to be supplied to the electrical power storage unit is controlled regardless of the actual power consumed by or supplied to the power consumer which may be a plurality of different power consumers, the number of potentially faulty or erroneous input variables may advantageously be reduced, such that in turn the security for electrically powering power consumers is improved, while a risk of harming or damaging an electrically sensitive power generating, power storing and/or power consuming unit is reduced.

This effect particularly is further enhanced by the electrical power storage unit which is on the one hand configured to supply power to the electrical power supply grid, and thus for example to the power consumer, and on the other hand configured to receive power from the electrical power supply grid, and thus for example from the power generation unit, thus providing for an advantageous power buffering system.

Furthermore, since power is supplied to the power consumer from the power generation unit and/or from the electrical power storage unit, the system particularly provides for an advantageous flexibility for powering the power consumer, wherein the power consumer is at least powered by one of the power generation unit and the electrical power storage unit.

In exemplary embodiments, the power consumer may be powered by the power generation unit and the electrical power storage unit, in particular in case when the power which the power consumer demands or requires is greater than the power which one of the power generation unit and the electrical power storage is configured to supply.

This advantageously improves the system's security for sufficiently powering the power consumer, in particular an electrical power consumer.

In exemplary embodiments, the power train control unit may be operably or communicatively disconnected from a control unit of a power consumer configured to control the power consumer. Thus, the power train control unit may in particular be operably or communicatively disconnected from the electrical consumer, which may in turn be a plurality of power consumers, particularly a plurality of different power consumers. In other words, the power train control unit may be communicatively disconnected from a power consumer control unit which is configured to control the power consumer or the plurality of power consumers.

Thus, even in case a power consumer control unit is provided, which may for example be configured to determine or measure power provided to or consumed by the power consumer or the plurality of power consumers, it particularly is advantageously ensured that the power to be supplied to the electrical power storage unit does not directly depend on the power provided to or consumed by the power consumer.

Accordingly, it is ensured that the power supplied to the electrical power storage unit does not directly depend on, and is therefore not affected by potential erroneously measured or erroneously communicated input variables provided by a plurality of different power consumers.

In particular embodiments, the at least one input variable reflective of the state and/or the condition of the electrical power storage unit may include an input variable reflective of a measured state of charge of the electrical power storage unit, and further include an input variable which is reflective of a target state of charge of the electrical power storage unit, and/or an input variable which is reflective of a power, in particular a charging or discharging current, supplied to or received from the electrical power storage unit.

In other words, the at least one input variable may be reflective of a measured state of charge of the electrical power storage unit and may further be reflective of a target state of charge of the electrical power storage unit, and/or the power, particularly the electrical charging or discharging current, supplied to or received from the electrical power storage unit.

The respective at least one input variable may particularly be a variable determined and/or measured in a step before the step in which the power train control unit is configured to control the power to be supplied to the electrical power storage unit.

In still further particular embodiments, the at least one input variable may be reflective of only or exclusively of the measured state of charge of the electrical power storage unit, the target state of charge of the electrical power storage unit, and the power, in particular the electric current, supplied to or received from the electrical power storage unit.

As emphasized above, the at least one input variable being reflective of the state and/or condition of the electrical power storage unit, i.e. the at least one input variable including a variable being reflective of the state and/or condition of the electrical power storage unit, advantageously allows for controlling the power to be supplied to the electrical power storage unit indirectly on the basis of the power consumed by or supplied to the power consumer.

Furthermore, the at least one input variable being reflective of the measured state of charge of the electrical power storage unit and further being reflective of the target state of charge of the power storage unit, i.e. the at least one input variable including an input variable being reflective of the measured state of charge of the electrical power storage unit and an input variable being reflective of the target state of charge of the electrical power storage unit, advantageously allows for efficiently securing a sufficient power supply to the electrical consumers, as the state of charge of the electrical power storage unit is controlled with respect to the target state of charge of it, while the electrical power storage unit is configured to buffer particular cases, wherein the power, particularly the electric current, consumed by the power consumer is greater than the power, particularly the electric current, generated by the power generation unit.

In case the at least one input variable is further reflective of the power, in particular the charging or discharging current, supplied to or received from the electrical power storage unit, i.e. in case the at least one input variable includes an input variable being reflective of the power, particularly the charging or discharging current, supplied to or received from the electrical power storage unit, the power train control unit is advantageously configured to control the power, particularly the electric current, to be supplied to the electrical power storage unit on the basis of a temporal prospect of the state and/or condition of the electrical power storage unit, and therefore enhances the reliability for efficiently securing sufficient power supply to the power consumer.

The electrical power supply grid as mentioned herein generally relates to a bus system which is configured to connect, particularly electrically connect at least a power generation unit, a power consumer and an electrical power storage unit. Said bus system may particularly include a low-voltage bus and/or a high-voltage bus. The electrical power supply grid may in particular include one or more converters for converting the power supplied between different buses. A low-voltage bus and a high-voltage bus may for example be connected by a low-voltage/high-voltage converter.

The first power train system of an aircraft may include one or more connectors, wherein a connector of the one or more connectors may particularly include one or more jumpers. The one or more connectors may be configured as selectively positionable or connectable with or disconnectable from the electrical power supply grid. Specifically, the one or more connectors particularly including one or more jumpers may be physically adjustable, such as pluggable and unpluggable for establishing, blocking or bypassing a particular electrical connection to the electrical power supply grid. In some embodiments, one or more connectors may be configured to establish, block or bypass an electrical connection of a unit or a subunit of the unit with respect to the power supply grid.

The power generation unit as mentioned herein may particularly include a fuel cell, particularly a hydrogen fuel cell. In exemplary embodiments, the power train system or the first power train system may include one fuel cell or a plurality of fuel cells, such as 2, 3, 4, 5, 6 or more fuel cells. Nevertheless, the power generation unit may also particularly include a combustion unit configured to burn hydrogen, kerosene, or any other suitable gas or fluid, wherein said combustion unit may particularly be connected to a generator, or any other suitable transformation unit which is configured to transform kinetic energy into electrical power.

In particular embodiments, the power generation unit may include a power generation converter which is configured to convert power generated by the power generation unit into power, particularly electric power, which is suitable to be supplied to the electric power supply grid.

The electrical power storage unit as mentioned herein may particularly include at least one battery or accumulator. In exemplary embodiments, the power train system or the first power train system may include one battery or accumulator or a plurality of batteries or accumulators, such as 2, 3, 4, 5, 6 or more batteries or accumulators. The electrical power storage unit may generally include a power storage unit configured to store energy, wherein the stored energy may be electrical power or any other suitable power storage medium.

In particular embodiments, the electrical power storage unit may be directly connected to the electrical power supply grid, without a transformation unit in between which may particularly be configured to transform the energy stored by the power storage unit into electrical power. By directly connecting to electrical power storage unit to the electrical power supply grid, a transformation unit can advantageously be omitted, thus advantageously avoiding further units which may suffer from a certain chance of causing errors.

However, in alternative embodiments, the electrical power storage unit may for example be connected to a transformation unit which is configured to transform the energy stored by the power storage unit into electrical power. In some embodiments, the electrical power storage unit may include a power storage converter which is configured to convert power supplied from the electrical power storage unit into power, particularly electric power, which is suitable to be supplied to the electric power supply grid. The power storage converter may further particularly be configured to convert power supplied from the electrical power supply grid into power, particularly electric power, which is suitable to be supplied to the electrical power storage unit.

The power consumer as mentioned herein may particularly include at least one electric motor which may for example be configured to power an aircraft propulsion unit, a flight control system of the aircraft, and/or an on board entertainment system, a heating unit, etc. In exemplary embodiments, the power consumer may include one power consumer or a plurality of power consumers.

In particular embodiments, the power consumer, the plurality of power consumers, or each of the plurality of power consumers may include a power consumer converter which is configured to convert power supplied from the electrical power supply grid into power, particularly electric power which is suitable to be supplied to the respective power consumer.

The power train control unit as mentioned herein may particularly include a computer readable storage unit comprising a computer readable medium, a reader and/or a writer for respectively reading and writing commands and/or data on the computer readable medium. The power train control unit may further particularly include a calculator and/or a determination unit and/or one or more control units, which are respectively configured to receive and/or calculate and/or determine particular variables, such as an input variable for controlling the power generated by the power generation unit on the basis thereof, and/or communicate variables and/or commands to units connected to the electrical power supply grid.

The power train control unit may particularly be communicatively connected to the electrical power supply grid, in particular to communicate a power supply command to a connection between the electrical power supply grid and the electrical power storage unit. The power supply command may for example be a power supplying command to supply power, particularly a determined and/or calculated charging current, from the electrical power supply grid to the electrical power storage unit, and/or a power limiting command configured to limit the power, particularly a charging current, to be supplied from the electrical power supply grid to the electrical power storage unit.

Furthermore, the power train control unit may particularly be connected to the electrical power storage unit and/or to a portion of the electrical power supply grid adjacent to the electrical power storage unit at which power supplied from the electrical storage unit to the electrical power supply grid, or power supplied from the electrical power supply grid to the electrical power storage unit can be determined and/or measured, or at which a variable reflective of a state and/or a condition of the electrical power storage unit, such as a state of charge and/or an electric current supplied to or received from the electrical power storage unit can be received, measured or determined.

In particular embodiments, the state of charge of the electrical power storage unit may be measured or determined by measuring or determining a voltage of the electrical power storage unit, and/or by measuring or determining an amount of coulombs in the electrical power storage unit, for example via a coulombmeter.

By measuring or determining the state of charge via the voltage of the electrical power storage unit, and/or via the amount of coulombs in the electrical power storage unit, the state of charge of the electrical power storage unit can reliably be measured.

In further particular embodiments, when measuring or determining the voltage of the electrical power storage unit for measuring or determining the state of charge of the electrical power storage unit, the measuring or determining the voltage may include applying a temperature correction to the measured or determined voltage on the basis of a temperature of the electrical power storage unit. By further applying a temperature correction to the measured or determined voltage, the state of charge can precisely be measured or determined on the basis of the voltage and the temperature of the electrical power storage unit.

In case a variable or a parameter is indicated as reflective of a certain physical property, said variable or parameter is to be understood as a variable or parameter directly and/or indirectly indicating said physical property. That is, in case a particular variable is for example reflective of a charging and/or discharging current to or from the electrical storage unit, said charging or discharging current may for example be measured directly as a certain current, or indirectly as a certain voltage at (or voltage drop across) a particular resistor, for example, such that a variable or parameter reflective of a charging and/or discharging current to or from the electrical storage unit may directly indicate the measured current, or indirectly indicate the current via the measured voltage. In case of an indirect indication, the power train control unit may be configured to internally convert the indirect indication into a direct indication or vice versa.

Herein, in case a measure, a ratio or an amount is given with the indication substantially or about, the respective measure or amount may be understood to be in a range of 0% to 10%, particularly in a range of 0% to 5% deviating from the respective measure or amount.

The present invention is not limited to a system for electrically powering electrical consumers of an aircraft particularly comprising a power train system of an aircraft, but may for example also be applied to other power train systems different from those of an aircraft, such as for example space shuttles, cars and/or ships. However, it is emphasized that the present invention is particularly advantageous for electrically powering electrical consumers of an aircraft, since aircrafts generally underly certain circumstances, for example with regards to required system redundancy and the powering fuel system overall, which are of course different from those of a car, wherein as an indicative example, passengers of a car may practically leave the car anytime in case a power storage unit or a power generation unit is disabled which would not be possible with regards to an aircraft.

In particular embodiments of the system for electrically powering electrical consumers of an aircraft, the state and/or the condition of the electrical power storage unit may include a target state of charge of the electrical power storage unit, a measured state of charge of the electrical power storage unit, and/or a charging or discharging current supplied to or received from the electrical power storage unit, respectively.

Owing to the at least one input variable being reflective of a target state of charge of the electrical power storage unit, and/or the measured state of charge of the electrical power storage unit, and/or the charging or discharging current respectively supplied to or received from the electrical power storage unit, the power to be supplied to the electrical power storage unit may be securely and efficiently controlled without having to monitor power consumers permanently and in detail, such that particularly damage due to possible overshoots of charging current to the electrical power storage unit can efficiently be prevented. Therefore, the system provides for advantageously reducing the complexity for electrically powering electrical consumers of an aircraft, which in turn reduces the risk of damaging electrically sensitive units connected to the electrical power supply grid, particularly reducing the risk of damaging the electrical power storage unit, which accordingly allows for providing a reliable power buffering unit for an aircraft having electrical consumers.

In exemplary embodiments, the target state of charge of the electrical power storage unit may be a predetermined or predeterminable ratio or percentage of a maximum state of charge of the electrical power storage unit. In particular embodiments, the target state of charge of the electrical power storage unit may be in a range of about 0.5 to about 0.95 of the maximum state of charge of the electrical power storage unit, particularly in a range of about 0.6 to about 0.9 of the maximum state of charge of the electrical power storage unit, and furthermore particularly in a range of about 0.7 to about 0.85 of the maximum state of charge of the electrical power storage unit.

The above-given particular ranges for the target state of charge of the electrical power storage unit advantageously secure the electrical power storage unit to form an electrical buffering unit which is configured to supply power to the electrical power supply grid, as well as to receive power from the electrical power supply grid, so as to buffer both cases, wherein too much power or too few power is generated by the power generation unit with respect to the power consumed by or demanded from the power consumer. Therefore, the target state of charge of the electrical power storage unit advantageously secures the electrical power storage unit to form the buffer for the first power train system, which in turn increases the working life of the power consuming, power storing and power generating units connected to the electrical power supply grid, particularly those power consuming, power storing and power generating units which are electrically sensitive, i.e. which are likely to be damaged in case they are supplied with too much or too few power, particularly electrical current.

In particular embodiments, the target state of charge of the electrical power storage unit may be given or (pre-) set by a master input unit, for example by a master input unit configured to be operated or adjusted by a pilot of the aircraft.

In exemplary embodiments, the target state of charge may be a ratio or percentage of a maximum state of charge of the electrical power storage unit at a predetermined or predeterminable state or time of the electrical power storage unit. In alternative embodiments, the target state of charge may be a ratio or percentage of a maximum state of charge of the electrical power storage unit at a present state or time of the electrical power storage unit, such as for example at a used state of the electrical power storage unit which the electrical power storage unit is in due to prior flights of the aircraft, for example, and therefore take a certain degradation of a maximum storable state of charge into account.

In exemplary embodiments, the state of charge of the electrical power storage unit may be measured by determining or by measuring a capacity level of the electrical power storage unit, in other words, by determining or by measuring the coulombs which are stored in the electrical power storage unit, and/or by determining or by measuring the voltage of the electrical power storage unit. Furthermore, the state of charge of the electrical power storage unit may be measured by determining or by measuring a capacity supplied from and received by the electrical power storage unit, in other words, by determining or by measuring the coulombs which are supplied by or received by the electrical power storage unit.

In exemplary embodiments, the charging or discharging current respectively supplied to or received from the electrical power storage unit may be measured by determining or by measuring the current to or from the electrical power storage unit, in other words, by determining or by measuring a variable being reflective of the electric current to or from the electrical power storage unit, for example by measuring the charging or discharging current of the electrical power storage unit, or a voltage at a resistance through which the charging or discharging current of the electrical power storage unit flows.

In particular embodiments, the state and/or the condition of the electrical power storage unit may include at least one of the target state of charge of the electrical power storage unit, the measured state of charge of the electrical power storage unit, and the charging or discharging current supplied to or received from the electrical power storage unit, respectively. Furthermore, the at least one input variable may particularly be different from the power supplied to or consumed by the power consumer. Specifically, the at least one input variable may be indirectly dependent on the power supplied to or consumed by the power consumer.

In further particular embodiments, the state and/or the condition of the electrical power storage unit particularly may at least include the target state of charge of the electrical power storage unit and the measured state of charge of the electrical power storage unit. Owing to the state and/or the condition at least including the target state of charge of the electrical power storage unit and the measured state of charge of the electrical power storage unit, the at least one input variable is indirectly dependent on the power supplied to the power consumer, while the power supplied to the power consumer may be handled as an unknown, in particular as an unknown disturbance to the electrical power supply grid. This advantageously simplifies the power train system of the system for electrically powering electrical consumers of an aircraft, and therefore provides for a reduced risk of failures, as the number of monitored and/or fed back physical properties is reduced, i.e. the number of variables monitored by the power train control unit and/or the number of variables fed back to the power train control unit is reduced.

In particular embodiments of the system for electrically powering electrical consumers of an aircraft, the state and/or the condition of the electrical power storage unit may only or exclusively be reflective of a target state of charge of the electrical power storage unit, a measured state of charge of the electrical power storage unit, and a charging or discharging current supplied to or received from the electrical power storage unit, respectively.

In still further particular embodiments, the state and/or the condition of the electrical power storage unit may only or exclusively include the target state of charge of the electrical power storage unit, the measured state of charge of the electrical power storage unit, and the charging or discharging current supplied to or received from the electrical power storage unit, respectively.

This advantageously reduces the monitoring complexity, while securing a sufficient power supply to the power consumers without having to monitor and/or to feed back the power consumption or the power supply to the power consumers.

In particular embodiments of the system for electrically powering electrical consumers of an aircraft, in case the power which the electrical power supply grid is configured to receive from the power generation unit is greater than the power which the electrical power supply grid is configured to supply to the power consumer, the electrical power supply grid may be configured to supply power to the electrical power storage unit, and/or
in case the power which the electrical power supply grid is configured to supply to the electrical power consumer is greater than the power which the electrical power supply grid is configured to receive from the power generation unit, the electrical power supply grid may be configured to receive power from the electrical power storage unit.

Owing to the electrical power supply grid particularly being configured to supply power to the electrical storage unit in case when the power which the electrical power supply grid is configured to receive from the power generation unit is greater than the power which the electrical power supply grid is configured to supply to the power consumer, and being configured to receive power from the electrical storage unit in case when the power which the electrical power supply grid is configured to supply to the electrical power consumer is greater than the power which the electrical power supply grid is configured to receive from the power generation unit, the power train system is configured with an efficient buffering mechanism which increases the working life of electrically sensitive power consuming, power storing and power generating units connected to the electrical power supply grid.

Specifically, in exemplary embodiments, the power generating unit when starting the aircraft, in particular upon starting a propulsion unit of the aircraft, may have a ramp-up delay for generating the power as required by the power train control unit to be supplied to the power consumer. Thus, when starting a propulsion unit of the aircraft, the power consumer particularly powering the propulsion unit may be supplied with power from the electrical power supply grid, which in turn is supplied with power at least partially from the electrical power storage unit, and, depending on the ramp-up delay, partially from the power generation unit.

When the power generation unit includes a ramp-up delay for power generation, the electrical power storage unit may particularly be configured to supply power to the power consumer via the electrical power supply grid, also when the measured state of charge of the electrical power storage unit is lower than the target state of charge of the electrical power storage unit.

Thus, the power supplied to the power consumer for powering the power consumer is sufficiently secured, even if no power consumption of the power consumer is measured, determined, and/or fed back.

In case an input variable being reflective of the power supplied to or received from the electrical power storage unit is used for controlling the power supplied to the electrical power storage unit, the power train control unit is advantageously configured to consider a temporal prospect with respect to the state and/or the condition of the electrical power storage unit.

Thus, after providing a certain power supply command to a connection between the power supply grid and the electrical power storage unit, and in case the power train control unit is configured to receive an input variable being reflective of the power supplied to the electrical power storage unit, the power train control unit may for example be configured to control the power supplied to the electrical power storage unit by reducing and/or limiting the power to be supplied to the electrical power storage unit, in particular in case the input variable reflective of the measured state of charge of the electrical power storage unit is greater than a first predetermined or predeterminable state of charge.

Furthermore, after providing a certain power supply command to the connection between the power supply grid and the electrical power storage unit, and in case the power train control unit is configured to receive an input variable being reflective of the power supplied to the electrical power storage unit, the power train control unit particularly may for example be configured to control the power supplied to the electrical power storage unit by increasing the power to be supplied to the electrical power storage unit, in particular in case the input variable reflective of the measured state of charge of the electrical power storage unit is lower than a first predetermined or predeterminable state of charge. The first predetermined or predeterminable state of charge may particularly be different from the target state of charge, and for example relate to a state of charge of the electrical power storage unit which is lower than the target state of charge of the electrical power storage unit.

In addition to the power train control unit being particularly configured to control the power supplied to the electrical power storage unit by increasing the power to be supplied to the electrical power storage unit, in particular in case the input variable reflective of the measured state of charge of the electrical power storage unit is lower than a first predetermined or predeterminable state of charge, the power train control unit may optionally further be configured to limit the power to be supplied to the electrical power storage unit, i.e. by particularly limiting a charging current supplied to the electrical power storage unit. The power, particularly the charging current, supplied to the electrical power storage unit may for example be limited to a predetermined threshold, or to a threshold depending on the state and/or the condition of the electrical power storage unit, as particularly determined and/or calculated by the power train control unit.

Further, after providing a certain power supply command to the connection between the power supply grid and the electrical power storage unit, and in case the power train control unit is configured to receive an input variable being reflective of the power received from the electrical power storage unit, the power train control unit particularly may for example be configured to control the power supplied to the electrical power storage unit by reducing and/or limiting the power to be supplied to the electrical power storage unit, in particular in case the input variable reflective of the measured state of charge of the electrical power storage unit is greater than a second predetermined or predeterminable state of charge. Furthermore, after providing a certain power supply command to the connection between the power supply grid and the electrical power storage unit, and in case the power train control unit is configured to receive an input variable being reflective of the power received from the electrical power storage unit, the power train control unit may for example be configured to control the power supplied to the electrical power storage unit by increasing and optionally limiting the power to be supplied to the electrical power storage unit, in particular in case the input variable reflective of the measured state of charge of the electrical power storage unit is lower than a second predetermined or predeterminable state of charge.

The second predetermined or predeterminable state of charge may particularly be different from the target state of charge, and for example relate to a state of charge of the electrical power storage unit which is greater than the target state of charge of the electrical power storage unit. Specifically, the second predetermined or predeterminable state of charge may correspond to a state of charge of the electrical power storage unit which is in between the target state of charge and the maximum state of charge of the electrical power storage unit.

In particular embodiments of the system for electrically powering electrical consumers of an aircraft, the first power train system may comprise a first control mode and a second control mode, wherein when in the second control mode, the power generation unit is forced to supply power to the electrical power supply grid while allowing a degradation of the power generation unit.

In particular embodiments, the second control mode particularly may correspond to a fail-safe control mode. The second control mode may for example be prompted upon detecting or determining a disconnection between the electrical power supply grid and the electrical power storage unit, and/or a faulty communication between the power train control unit and the electrical power storage unit, and/or a faulty communication between the power train control unit and a converter interconnected between the power train control unit and a power generator of the power generation unit, and/or in case when no state of charge of the electrical power storage unit is measurable, and/or in case when no power supplied to or received from the electrical power storage unit is measurable. In particular embodiments, the second control mode may be prompted upon disconnection between the electrical power supply grid and the electrical power storage unit, and/or a faulty communication between the power train control unit and the electrical power storage unit passively, and/or a faulty communication between the power train control unit and the converter interconnected between the power train control unit and the power generator of the power generation unit passively, for example without requiring a separate mode switch command by the power train control unit to the power generation unit.

In particular embodiments, the power train control unit and the power generator of the power generation unit may be communicatively separate from one another, but the power train control unit may be communicatively connected to a converter, particularly a HV DC/DC converter, which is electrically interconnected between the power train control unit and the power generator of the power generation unit. In particular embodiments, the HV DC/DC converter may be electrically interconnected between the electrical power supply grid and the power generator of the power generation unit.

In particular embodiments, upon determining or detecting one of the cases for prompting the fail-safe control mode, the power train control unit may be configured to communicate the fail-safe mode the converted which is electrically interconnected between the power train control unit and the power generator of the power generation unit. Said converter may then be configured to start working at a predetermined fail-safe threshold. Said predetermined fail-safe threshold may be configured to passively physically force the power generator of the power generation unit to supply as much power to the converter, and thus to the electrical power supply grid, as physically possible, thus particularly allowing a potential degradation of the power generation unit, particularly of the power generator, such as one or more fuel cells.

The second control mode (particularly corresponding to a fail-safe control mode) particularly may be configured to control or force the power generation unit to generate a maximum power which the power generation unit is configured to generate, in particular to at least temporarily generate a maximum power which the power generation unit is configured to generate.

Specifically, the second control mode which may correspond to a fail-safe control mode may be a control mode, wherein the power generation unit is passively physically forced to generate power as if no electrical power storage unit was connected to the electrical power supply grid.

Therefore, when the control mode is switched to the second control mode, the power generation unit is particularly configured and/or forced to generate, at least temporarily, a maximum power to be supplied to the electrical power supply grid. In this way, the second control mode secures a predetermined supply of power to the electrical power supply grid, wherein the power consumed by or supplied to the power consumer may particularly be unknown.

However, since the power generation unit is configured and/or forced to generate the maximum power, the power generation unit may particularly be configured to degrade.

Specifically, the power generation unit may be configured to degrade, when generating power according to the second control mode, to an extent which makes the power generation unit unusable for further flights and/or which forces the aircraft to land within a predetermined period of time. A certain degradation of the power generation unit may particularly be caused, in the temporary case when more power is demanded from the power consumer than the power generation unit can generate.

Owing to the second control mode which particularly may be a fail-safe control mode, a predetermined power may be supplied to the electrical power supply grid while allowing a degradation of the power generation unit, particularly a destructive degradation of the power generation unit, in order to secure a predetermined power supply until landing of the aircraft.

Nevertheless, in some embodiments, and in particular depending on the power supplied to the power consumer and/or the electrical power storage unit when the control mode is the second control mode, a degradation which is configured to disable further use of the power generation unit may be prevented, and/or returning to the normal control mode may be possible.

Specifically, the second control mode may be switched back to the first control mode, in case the electrical power storage unit is detected or determined as connected to the electrical power supply grid, and/or in case a faulty communication between the power train control unit and the electrical power storage unit is no longer detected or determined, and/or in case when the state of charge of the electrical power storage unit is again measurable and/or in case when the power supplied to or received from the electrical power storage unit is again measurable.

In particular embodiments, the first control mode may correspond to a normal control mode, which may particularly correspond to a control mode, wherein the power generated by the power generation unit is passively physically demanded by the converter, in particular the HV DC/DC converter, which is electrically interconnected between the electrical power supply grid and the power generator of the power generation unit, wherein the converter works in a default state, on the basis of the electrical power supply grid and power received therefrom and supplied thereto by the respective units electrically connected to the electrical power supply grid.

In particular embodiments of the system for electrically powering electrical consumers of an aircraft, the system may further include at least one connector which may particularly include one or more integrated jumpers, wherein the connector has a plugged state (connected state) with respect to the electrical power supply grid and an unplugged state (disconnected state) with respect to the electrical power supply grid,
wherein when in the plugged state, the connector is configured to physically block a connection of the electrical power supply grid with an external power supply, and
wherein when in the unplugged state, the connector is configured to physically allow the connection of the electrical power supply grid with the external power supply while electrically disconnecting the power generation unit from the electrical power supply grid.

Specifically, the electrical power supply grid may include the connector which may be plugged to and unplugged from the electrical power supply grid or be in a plugged state or an unplugged state with respect to the electrical power supply grid.

In particular embodiments, the connector may be plugged to and unplugged from a portion of the power generation unit, and thus be in a plugged state or an unplugged state with respect to the electrical power supply grid, wherein when in the plugged state, the connector is configured to physically block a connection of the electrical power supply grid with an external power supply, and wherein when in the unplugged state, the connector is configured to physically allow the connection of the electrical power supply grid with the external power supply while electrically disconnecting a power generator of the power generation unit from the power generation unit and thus from the electrical power supply grid.

Owing particularly to the connector, an advantageously functional integrative element is provided, which when being in the plugged state, secures a connection of the power generation unit to the electrical power supply grid or connects the power generation unit to the electrical power supply grid, while blocking a connection of the electrical power supply grid with an external power supply. That is, the connector when being in the plugged state is particularly configured to prevent plugging the external power supply to the electrical power supply grid. The external power supply may be any kind of a power supply, for example a generator, an external battery, or similar means.

On the other hand, when being in the unplugged state, the connector may particularly be unplugged with respect to electrical power supply grid such that the power generation unit may particularly be electrically disconnected from the electrical power supply grid, or at least a power generator of the power generation unit may be electrically disconnected from the electrical power supply grid.

However, the connector being in the unplugged state particularly allows an external power supply plug of the external power supply to be connected to the electrical power supply grid. The external power supply may be plugged to the electrical power supply grid for example for maintenance of the electrical power supply grid, for maintenance of one or more power consumers connected to the electrical power supply grid, and/or for maintenance or charging of the electrical power storage unit.

Owing particularly to the connector being in the unplugged or the plugged state with respect to the electrical power supply grid as emphasized above, it can advantageously and efficiently be prevented that the power generation unit is electrically connected to the external power supply, which is particularly advantageous in case the power generation unit includes one or more fuel cells, wherein charging the one or more fuel cells may result in damage to the one or more fuel cells.

In particular embodiments of the system for electrically powering electrical consumers of an aircraft, the power generation unit may comprise a fuel cell; and/or the power consumer may comprise an electric motor, the electric motor preferably being configured to power a propulsion unit of the aircraft; and/or the electrical power storage unit may comprise a battery.

The system for electrically powering electrical consumers of an aircraft particularly comprising one or more fuel cells, and/or one or more electric motors, for example for powering one or more propulsion units of the aircraft, and/or one or more batteries, advantageously provides for a system suitable to power an aircraft alternatively to kerosene.

In particular embodiments of the system for electrically powering electrical consumers of an aircraft, the system may comprise the first power train system and a second power train system, wherein the first power train system and the second power train system are electrically separated from one another.

Owing particularly to the system for electrically powering electrical consumers of an aircraft, wherein the system comprises more than the first power train system, but wherein in particular a second power train system is electrically separated or disconnected from the first power train system, an aircraft may be provided with independent electrically powering systems, for securing at least the powering of a part of a number of power consumers, particularly of a part of a number of propulsion units.

Nevertheless, in alternative embodiments, the system for electrically powering electrical consumers of an aircraft may comprise at least two power train systems, wherein each power train system is electrically connected to one or more propulsion units, but wherein the power train systems are electrically disconnected or separated from one another, which advantageously secures an independence of the respective power train systems.

In still further alternative embodiments, each power train system of a plurality of power train systems may include an electrical power storage unit which is connected to another electrical power storage unit of another power train system, for example via a cross connection. This may advantageously enhance a power exchange between a plurality of power train systems, for example in the particular case when a power generation unit connected to a first electrical power supply grid is weaker than another power generation unit connected to a second electrical power supply grid.

The second power train system may generally correspond to the first power train system but shall not be limited to it.

Generally, the system for electrically powering electrical consumers of an aircraft may be configured to include one or more power train systems.

According to another aspect, an aircraft propulsion system is provided, the aircraft propulsion system comprising:
a system for electrically powering electrical consumers of an aircraft, as mentioned above, and
a power consumer including an electric aircraft propulsion system,
wherein the power consumer is electrically connected to the electrical power supply grid.

The electric aircraft propulsion system may particularly include one or more electric motors, for example for powering one or more electric aircraft propulsion units. An electric aircraft propulsion unit of the one or more electric aircraft propulsion units may particularly include an electric fan, an electric turbo fan or an electric jet engine. Furthermore, an electric aircraft propulsion unit of the one or more electric aircraft propulsion units may particularly be a non-combustive aircraft propulsion unit.

The electric aircraft propulsion system may further particularly include a motor inverter which may particularly be interconnected between the electric motor and the power supply grid, for example for changing the current as supplied from the power supply grid to a current suitable for powering the electric motor.

In particular embodiments, the power consumer may particularly include one or more low-voltage consumers. The one or more low-voltage consumers may for example be intermediary connected to the power supply grid via one or more low-voltage converters. A low-voltage consumer of the one or more low-voltage consumers may include a low-voltage power storage and/or a low-voltage bus, for supplying power to one or more low-voltage power consumers.

The aircraft propulsion system particularly allows for reliably and particularly passively power an electric aircraft propulsion system, and thus to ecologically friendly power an aircraft, while reducing the risk of faulty control communication, as well as reducing the risk of damage to the electrical power storage unit.

The aforementioned exemplary, particular and alternative aspects and embodiments of the system for electrically powering electrical consumers of an aircraft, along with their advantageous effects, also respectively apply to the aircraft propulsion system, and vice versa.

According to another aspect, a method for controlling a first power train system of a system for electrically powering electrical consumers of an aircraft is provided, the method comprising the steps of:
- providing an electrical power supply grid for electrically connecting at least a power generation unit, a power consumer and an electrical power storage unit, the electrical power supply grid being configured to:
   -- receive power from the power generation unit,
   -- supply power to the electrical power storage unit generated by the power generation unit or receive power from the electrical power storage unit, and
   -- supply power from the power generation unit and/or from the electrical power storage unit to the power consumer;
- receiving at least one input variable being reflective of a state and/or a condition of the electrical power storage unit; and
- controlling the power supplied to the electrical power storage unit at least on the basis of the at least one input variable.

The aforementioned exemplary, particular and alternative aspects and embodiments of the system for electrically powering electrical consumers of an aircraft and the aircraft propulsion system, along with their advantageous effects, also respectively apply to the method for controlling a first power train system of a system for electrically powering electrical consumers of an aircraft and vice versa. Specifically, the power train control unit of the first power train system of the system for electrically powering electrical consumers of an aircraft may be configured to perform the steps of the method for controlling a first power train system of a system for electrically powering electrical consumers of an aircraft.

The method for controlling a first power train system of a system for electrically powering electrical consumers of an aircraft provides for controlling the generated power by the power generation unit on the basis of the at least one input variable being reflective of a state and/or a condition of the electrical power storage unit advantageously provides for a simplified method for securely powering electrical consumers of an aircraft.

In particular embodiments, the step of receiving at least one input variable may include receiving an input variable which is reflective of a target state of charge of the electrical power storage unit, for example from a master control unit, which may be particularly operable by a pilot. Optionally or additionally, the step of receiving at least one input variable may include receiving an input variable which is reflective of a state of charge of the electrical power storage unit, for example by measuring, determining, estimating the state of charge of the electrical power storage unit or a variable being reflective of the state of charge of the electrical power storage unit. Further optionally or additionally, the step of receiving at least one input variable may include receiving an input variable which is reflective of a power supplied to or received from the electrical power storage unit, for example by measuring, determining, estimating the power supplied to or received from the electrical power storage unit, wherein the power supplied to or received from the electrical power storage unit, may respectively be a charging current or a discharging current which is supplied to or received from the electrical power storage unit.

In further particular embodiments, the step of receiving at least one input variable may include at least two of receiving an input variable which is reflective of a target state of charge of the electrical power storage unit, receiving an input variable which is reflective of a state of charge of the electrical power storage unit, and receiving an input variable which is reflective of a power supplied to or received from the electrical power storage unit.

In still further particular embodiments, the step of receiving at least one input variable may only or exclusively include receiving an input variable which is reflective of a target state of charge of the electrical power storage unit, receiving an input variable which is reflective of a state of charge of the electrical power storage unit, and receiving an input variable which is reflective of a power supplied to or received from the electrical power storage unit.

In particular embodiments, the step of controlling the power supplied to the electrical power storage unit at least on the basis of the at least one input variable may particularly include the steps of
- determining or calculating power to be supplied to the electrical power storage unit of the first power train system,
   -- wherein the power to be supplied to the electrical power storage unit is determined or calculated on the basis of the received at least one input variable being reflective of the state and/or the condition of the electrical power storage unit; and/or
- providing a power supply command to a connection between the electrical power supply grid and the electrical power storage unit for supplying power to the electrical power storage unit, in particular for supplying power determined or calculated on the basis of the received at least one input variable being reflective of the state and/or the condition of the electrical power storage unit.

In particular embodiments, the method for controlling a first power train system of a system for electrically powering electrical consumers of an aircraft may further comprise the steps of:
- providing a target state of charge of the electrical power storage unit;
- measuring a state of charge of the electrical power storage unit; and/or
- measuring a charging or discharging current which is supplied to or received from the electrical power storage unit; and
- determining the power to be supplied to the electrical power storage unit on the basis of a first input variable being reflective of the provided target state of charge of the electrical power storage unit, a second input variable being reflective of the measured state of charge of the electrical power storage unit, and/or a third input variable being reflective of the measured charging or discharging current which is supplied to or received from the electrical power storage unit, respectively.

In particular embodiments, the method for controlling a power train system of an aircraft may further comprise the step of:
- switching a control mode of the first power train system from a first control mode to a second control mode, in case a faulty operation state of the electrical power storage unit and/or of the power generation unit is determined;
   -- wherein when in the second control mode of the first power train system, the method further comprises the step of:
- forcing the power generation unit to generate a maximum possible power.

In other words, the control mode may particularly be switched from the first control mode to the second control mode in case a faulty operation state of the electrical power storage unit is determined, and additionally or optionally in case a faulty operation state of the power generation unit is determined.

That is, in the second control mode which may particularly correspond to a fail-safe control mode, the power generation unit may be configured or forced to generate a maximum possible power for supplying to the electrical power supply grid. Furthermore, when in the second control mode, the power generation unit may particularly be configured or forced, particularly passively forced by the converter electrically interconnected between the electrical power supply grid and the power generator of the power generation unit, to generate a maximum possible power regardless of the state of charge of the electrical power storage unit, and/or regardless of the power supplied to or received from the electrical power storage unit, and/or regardless of the power supplied to or consumed by the power consumer.

In further particular embodiments, the method may comprise the step of:
- determining an operation state of the electrical power storage unit, and/or of the power generation unit;
   -- wherein a faulty operation state of the electrical power storage unit and/or the power generation unit is determined:
      --- in case the electrical power storage unit is disconnected from the electrical power supply grid, and/or
      --- in case no state of charge of the electrical power storage unit is measurable or determinable; and/or
      --- in case no power to be supplied to or received from the electrical power storage unit is measurable or determinable; and/or
      --- in case a communication error between the electrical power storage unit and a power train control unit is determined or detected; and/or
      --- in case a communication error between the power train control unit and a converter which is interconnected between the power train control unit and a power generator of the power generation unit is determined or detected.

The power train control unit may particularly be a means which may substantially be configured to perform or execute the steps of the method for controlling a power train system of an aircraft.

Nevertheless, in particular the step of switching a control mode of the first power train system from a first control mode to a second control mode may be configured as a passive step which is automatically triggered in case a faulty operation state of the electrical power storage unit and/or the power generation unit occurs, is determined or detected. The second control mode may particularly correspond to fail-safe control mode. The first control mode may particularly correspond to a normal control mode, wherein the power generated by the power generation unit is passively physically demanded by the converter, in particular the HV DC/DC converter, which is electrically interconnected between the electrical power supply grid and the power generator of the power generation unit, wherein the converter works in a default state, on the basis of the electrical power supply grid and the power respectively received from and supplied to the electrical power supply grid by the respective units electrically connected to the electrical power supply grid.

In particular embodiments of the method for controlling a first power train system of an aircraft, the received at least one input variable may be only or exclusively reflective of a target state of charge of the electrical power storage unit, a measured state of charge of the electrical power storage unit, and a charging or discharging current supplied to or received from the electrical power storage unit, respectively.

In other words, the step of receiving at least one input variable being reflective of a state and/or a condition of the electrical power storage unit of the method for controlling a first power train system of an aircraft may particularly include receiving at least one input variable which is only or exclusively reflective of a target state of charge of the electrical power storage unit, a measured state of charge of the electrical power storage unit, and a charging or discharging current supplied to or received from the electrical power storage unit, respectively.

According to another aspect, a computer program product (particularly embodied as a tangible computer medium and/or as a signal) is provided, the computer program product comprising computer-readable instructions which, when loaded and executed on a suitable system (such as the system described above or a particular embodiment thereof) performs the steps of a method for controlling a first power train system of a system for electrically powering electrical consumers of an aircraft according to the aforementioned aspects, particular, exemplary and alternative embodiments.

The suitable system which performs the steps of a method for controlling the first power train system of the system for electrically powering electrical consumers of an aircraft may particularly be a system according to the aforementioned aspects, particular, exemplary and alternative embodiments, particularly of those relating to the system for electrically powering electrical consumers of an aircraft.

The aforementioned exemplary, particular and alternative aspects and embodiments of the system for electrically powering electrical consumers of an aircraft, and the method for controlling a first power train system of a system for electrically powering electrical consumers of an aircraft, along with their advantageous effects, also respectively apply to the computer program product, and vice versa.

The disclosure further includes the following particular aspects, features and embodiments:
An aircraft system comprising a system for electrically powering electrical consumers of an aircraft and a set of electrical power consumers. The system for electrically powering electrical consumers of an aircraft particularly comprises:
- at least one power generation unit, and
- a power train control unit configured to receive at least one input variable being reflective of a state and/or a condition of the electrical power storage unit and to control the power supplied to the electrical power storage unit at least based on the at least one input variable, and
- at least one electrical power storage unit, and
- an electrical power supply grid for electrically connecting at least a power generation unit, power consumer(s) and an electrical power storage unit, wherein the electrical power supply grid is configured to:
   ∘ receive power from the power generation unit,
   ∘ supply power to the electrical power storage unit generated by the power generation unit or receive power from the electrical power storage unit, and
   ∘ supply power from the power generation unit and/or from the electrical power storage unit to the power consumer; and
- an optional external power supply, which is particularly connectable to the electrical power supply grid, for example via an external power supply mains.

In particular embodiments of the system for electrically powering electrical consumers of an aircraft, the state and/or the condition of the electrical power storage unit includes a target state of charge of the electrical power storage unit, a measured state of charge of the electrical power storage unit, and/or a measured charging or discharging current supplied to or received from the electrical power storage unit, respectively.

In particular embodiments of the system for electrically powering electrical consumers of an aircraft, the state and/or the condition of the electrical power storage unit is exclusively reflective of a target state of charge of the electrical power storage unit, a measured state of charge of the electrical power storage unit, and a charging or discharging current supplied to or received from the electrical power storage unit, respectively.

In particular embodiments of the system for electrically powering electrical consumers of an aircraft, in case the power which the electrical power supply grid is configured to receive from the power generation unit is greater than the power which the electrical power supply grid is configured to supply to the power consumer, the electrical power supply grid is configured to supply power to the electrical power storage unit, and/or
in case, the power which the electrical power supply grid is configured to supply to the electrical power consumer is greater than the power which the electrical power supply grid is configured to receive from the power generation unit, the electrical power supply grid is configured to receive power from the electrical power storage unit.

In particular embodiments of the system for electrically powering electrical consumers of an aircraft, the first power train system comprises a first control mode and a second control mode,
wherein when in the second control mode, the power generation unit is forced to supply power to the electrical power supply grid while allowing degradation of the power generation unit.

In particular embodiments, the system for electrically powering electrical consumers of an aircraft further includes a receptacle with integrated connector(s)/bridge(s), reflecting the state of the external power supply connection to the intermediate-voltage grid, and power connectors to the intermediate-voltage grid. There may be two plugs, each reflecting one operational mode:
- The plug connected to the receptacle configured for the flight mode feeds discrete signals reflecting the flight-mode state.
   ∘ It enables a corresponding control mode at the power train control unit, and
   ∘ enables the power generator, and
   ∘ protects the power contacts (against dirt, water and touching).
- The plug connected to the receptacle configured for the external-power-supply mode feeds discrete signals reflecting the external-power-supply-mode state and connects the external power supply to the intermediate-voltage bus.
   ∘ It enables a corresponding control mode at the power train control unit, and
   ∘ disables the power generator, and
   ∘ disables the power generators, high-side contactors (protection against overvoltage and/or reverse current), and
   ∘ feeding power from the external-power supply to the high voltage DC/DC converter via the intermediate-voltage bus, and
   ∘ provides a discrete signal (interlock) to the external power supply to enable the external power supply.

In particular embodiments, one of the above plugs must be plugged into the receptacle to operate the system in either the flight mode or the external-power-supply mode.

In particular embodiments, the system for electrically powering electrical consumers of an aircraft comprises:
- at least one power generation unit comprising a fuel cell and/or a high voltage DC/DC converter; and/or
- at least one electrical power storage unit particularly comprising a battery.

A method for controlling the system and the selection of the high-voltage DC/DC enables to be independent of the power source (i.e. power generator and/or external power supply) connected to the intermediate bus as long as their power output operates within the input ranges of the HV DC/DC. This design advantageously allows operating with only one HV DC/DC and one control logic.

In particular embodiments, the aircraft propulsion system of an aircraft comprises consumers:
- at least one electric aircraft propulsion system comprising a motor controller/inverter and an electric motor preferably configured to drive an electric aircraft propulsion unit of the aircraft; and/or
- any number of low-voltage supplies comprising any number of converters and any number of secondary energy-storage units, preferably batteries, feeding low-voltage consumers via a low-voltage grid.

Further provided is a method for controlling a system for electrically powering electrical consumers of an aircraft, the method comprising the steps of:
- providing an electrical power supply grid for electrically connecting at least a power generation unit, a power consumer and an electrical power storage unit, the electrical power supply grid being configured to:
   ∘ receive power via the intermediate-voltage grid (i.e. from the power generator and/or the external power supply),
   ∘ supply power to the electrical power storage unit generated by the power generation unit or receive power from the electrical power storage unit, and
   ∘ supply power from the intermediate-voltage grid and/or from the electrical power storage unit to the power consumer;
- receiving maximal two input variables reflective of
   ∘ a state and/or a condition of the electrical power storage unit and
   ∘ the power or power flow towards or from the electrical power storage unit; and
- controlling the power or power flow supplied to the electrical power storage unit at least based on the two input variables aforementioned.

In particular embodiments, the method for controlling of a system for electrically powering electrical consumers of an aircraft further comprises the steps of:
- providing a target state of charge of the electrical power storage unit (optionally provided externally);
- measuring a state of charge of the electrical power storage unit; and/or
- measuring a charging or discharging current, which is supplied to or received from the electrical power storage unit; and
- determining the error between the target state of charge and the state of charge measured; and
- determine a corrective current request based on the state of charge error; and
- determine the current error between the corrective current request and charging or discharging current measured; and
- determine a corrective current request based on the current error determined beforehand.

In particular embodiments, the method for controlling of a system for electrically powering electrical consumers of an aircraft further comprises the step of:
- switching a control mode of the system from a first control mode to a second control mode in case of a faulty operation state of the electrical power storage unit and/or of the power generation unit is determined;
   ∘ wherein when in the second control mode of the system, the method further comprises the step of:
- forcing the power generation unit to feed enough power to keep the high-voltage-bus voltage on its maximum level.

In particular embodiments, the method for controlling of a system for electrically powering electrical consumers of an aircraft further comprises the step of:
- determining an operation state of the electrical power storage unit and/or of the power generation unit;
   ∘ wherein the faulty operation state of the electrical power storage unit and/or of the power generation unit is determined:
      ▪ in case the electrical power storage unit is disconnected from the electrical power supply grid; and/or
      ▪ in case no state of charge of the electrical power storage unit is measurable or determinable; and/or
      ▪ in case no power to be supplied to or received from the electrical power storage unit is measurable or determinable; and/or
      ▪ in case a communication error between the electrical power storage unit and a power control unit is determined or detected; and/or
      ▪ in case of a communication error or between the power train control unit and the HV DC/DC converter, which is particularly interconnected between the power train control unit and the power generator of the power generation unit, is determined or detected; and/or
      ▪ in case a communication error between the electrical power storage unit and the high-voltage DC/DC is determined or detected (if the control logic of the PCU is integrated into the high-voltage DC/DC).

In particular embodiments of the method for controlling of a system for electrically powering electrical consumers of an aircraft, the step of controlling the power or the power flow supplied to the electrical power storage unit based on the maximal two input variables may include at least the steps of:
- determining or calculating power to be supplied to the electrical power storage unit of the first power train system,
   ∘ wherein the power to be supplied to the electrical power storage unit is determined or calculated based on the maximal one input variable being reflective of the state and/or condition of the electrical power storage unit; and
- providing a power supply command to a connection between the electrical power supply grid and the electrical power storage unit for supplying power to the electrical power storage unit determined or calculated based on the received maximal one input variable being reflective of the state and/or the condition of the electrical power storage unit.

In particular embodiments of the method for controlling of a system for electrically powering electrical consumers of an aircraft, the received maximal one input variable is exclusively reflective of a target state of charge of the electrical power storage unit, maximal one input variable is exclusively reflective of a measured state of charge of the electrical power storage unit, and maximal one input variable is exclusively reflective of charging or discharging current supplied to or received from the electrical power storage unit, respectively.

A computer program product comprising computer-readable instructions which, when loaded and executed on a suitable system, perform the steps of a method as mentioned above.

The one or more low-voltage converters as provided in particular embodiments are particularly designed and/or configured to be supplied directly from the high-voltage bus of the power supply grid and, particularly passively, turned on if high voltage is present and/or turned off if no high voltage is present.

The one or more low-voltage converters are particularly designed and/or configured to convert high voltage to low-voltage based on the following conditions:
- The last consecutive of the constantly measured voltages on the high-voltage bus are all above a pre-defined voltage threshold, whereby the number of consecutively measured values may be fixed and/or predefined.
- The output voltage may be lower or equal to the output-voltage limit.

The one or more low-voltage converters are designed and/or configured to limit current or power flow based on at least one of the following conditions:
- The physical limit of the converter is reached.
- An internally fixed set current limit for input or/and output is reached.
- A temperature limit is reached.

The respective limit may particularly be pre-defined or selected so as to provide enough current or power flow to the system, and additionally or alternatively not to damage and/or derate subsequent components (for example the power storage unit). The electrical-power-storage unit may be designed and/or configured to, particularly passively, connect itself to the electrical-power-supply grid if a low-voltage supply is present.

The electrical-power-storage unit may be designed and/or configured to, particularly passively, disconnect itself from the electrical-power-supply grid if at least one of the following conditions is met:
- if no low-voltage supply is present; and/or
- if an overcurrent was detected; and/or
- if the lowest cell voltage of one or more cells of the electrical power storage unit is below a minimum voltage (deep discharge).

The electrical power storage unit may be designed and/or configured to, particularly passively, keep itself disconnected even if a low-voltage supply is present if at least one of the following conditions is met:
- if the battery was deep discharged in a previous cycle; and/or
- if a deep discharge took place and a charging current occurs.

A hydrogen-power-converter unit may be designed and/or configured to, particularly passively, start operating if a low-voltage supply is present. The hydrogen-power-converter may particularly be comprised by the power generation unit, particularly the power generator of the power generation unit.

The hydrogen-power-converter unit may be designed and/or configured to, particularly passively, operate based on an external discrete signal.
- When the power generator is in a ramp-up state the power generator may be configured to, particularly passively,
   ∘ connect itself to the intermediate-voltage bus; and
   ∘ go into run mode, starting hydrogen conversion.
- When the power generator is turned low, in a ramp-down state or in a state of shutting down, the power generator may be configured to, particularly passively,
   ∘ stop hydrogen conversion and/or turn down; and
   ∘ disconnect itself from the intermediate-voltage bus.

The beforementioned external discrete signal may be directly connected to the power plant master switch.

The power generation unit, particularly the hydrogen-power-converter unit, may be designed and/or configured to control itself based on the current or power flow drawn from it via the intermediate-voltage grid or intermediate-voltage bus (i.e. directly or indirectly by the high-voltage DC/DC converter).

The high-voltage DC/DC converter (HV DC/DC) may be designed and/or configured to convert intermediate voltage to high voltage particularly based on one or more of the following conditions:
- The last consecutive ones of the particularly constantly measured voltages on the intermediate-voltage bus are all above a pre-defined voltage threshold, whereby the number of consecutively measured values may be fixed and predefined.
- The last consecutive ones of the particularly constantly measured voltages on the high-voltage bus are all above a pre-defined voltage threshold, whereby the number of consecutively measured values is fixed and predefined.
- A low-voltage supply is present.
- A current request, or power request to be generated by the power generation unit, is received from the power train control unit.

The low-voltage supply is particularly formed by a low-voltage bus which is configured to connect the power supply grid with one or more low-voltage consumers.

The low-voltage supply to one or more low-voltage powered subcomponents of the aircraft propulsion system, the aircraft, or the power train system may be controlled by a master switch controlling a master contactor.
- Wherein the master contactor may be configured to close the contact to the power supply grid if the master switch is turned on and provides a low-voltage power supply to the one or more low-voltage powered subcomponents.
- Wherein the master contactor may be configured to open the contact to the power supply grid, particularly with a predetermined time delay, if the master switch is turned off.

The predetermined time delay particularly allows the subcomponents to perform a self-coordinated shutdown. It ensures a safe and definite low-voltage supply cut-off to the low-voltage powered subcomponents.

These and other objects, features and advantages of the present invention will become more apparent upon reading of the following detailed description of particular embodiments and accompanying drawings. It should be understood that even though embodiments are separately described, single features thereof may be combined to additional embodiments.
- Figure 1: shows a diagram of a system for electrically powering electrical consumers of an aircraft;
- Figure 2: shows a control diagram for controlling a system for electrically powering electrical consumers of an aircraft; and
- Figure 3: shows a flowchart of an exemplary method for controlling a system for electrically powering electrical consumers of an aircraft.

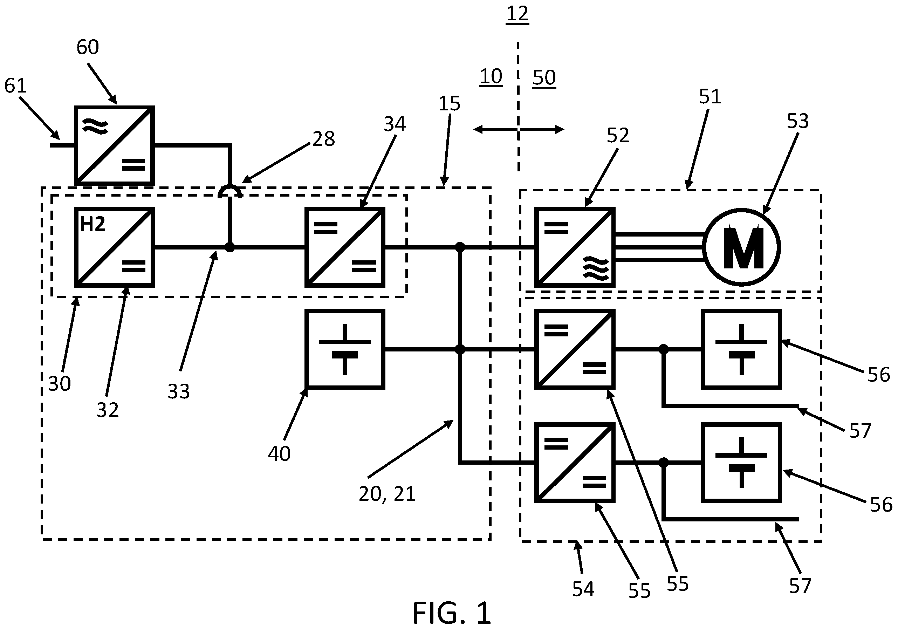

**Fig. 1** shows a diagram of a system 10 for electrically powering electrical consumers of an aircraft according to an embodiment of the present invention. As shown in Fig. 1, the system 10 for electrically powering electrical consumers of an aircraft in particular includes a first power train system 15. As indicated in Fig. 1, the power train system 15, and thus the system 10 for electrically powering electrical consumers of an aircraft, in particular includes an electrical power supply grid 20, a power generation unit 30, an electrical power storage unit 40 and/or at least one power consumer 50, and/or may particularly be connected to at least one power consumer 50. The power generation unit 30, the electrical power storage unit 40 and the power consumer 50 are connected or connectable to the electrical power supply grid 20, and as indicated in Fig. 1 may particularly be electrically connected to one another via the electrical power supply grid 20.

The electrical power supply grid 20 may at least include a high-voltage bus (HV bus) 21 to which in particular the electrical power storage unit 40 the power generation unit 30 and the power consumer 50 may respectively be connected to. The HV bus 21 may particularly be configured to supply power at high voltage, for example in a range of about 500 V to about 900 V.

As indicated in Fig. 1, the electrical power generation unit 30 may in particular include a power generator 32 and a HV DC/DC converter 34, wherein the power generator 32 may be electrically connected to the HV DC/DC converter 34. The HV DC/DC converter 34 may particularly be configured to electrically interconnect the power generator 32 with the HV bus 21 of the electrical power supply grid 20. Furthermore, the HV DC/DC converter 34 may be configured to convert a power at a power generator side to a power at an electrical power supply grid side of the HV DC/DC converter 34. The power generator 32 may particularly include one or more fuel cells, particularly one or more hydrogen fuel cells, but is not limited thereto.

As further shown in Fig. 1, the power consumer 50 may in particular include one or more electric aircraft propulsion systems 51, which particularly be configured as one or more high-voltage power consumers. Additionally or alternatively, the power consumer 50 may include one or more low-voltage consumers 54. The electric aircraft propulsion system 51 may particularly include an electric motor 53 which is configured to power one or more electrically powered aircraft engines, particularly non-combustive aircraft propulsion unit.

The electric aircraft propulsion system 51 may further particularly include one or more motor inverters 52, for example one or more motor converters 52 for all electric motors 53 or one motor converter 52 for each electric motor 53 of the electric aircraft propulsion system 51. The one or more motor inverters 52 may particularly be configured to change or convert power or a power flow from the electrical power supply grid 20, particularly the HV bus 21, to a power or power flow suitable for powering the one or more electric motors 53, for example from direct current (DC) to alternating current (AC), and/or from alternating current (AC) to direct current (DC).

In other words, the motor inverter 52 may be configured to convert a power at an electrical power supply grid side of the motor inverter 52 to a power at a consumer side of the motor inverter 52, particularly at which the one or more electric motors 52 are operable.

Through the HV DC/DC converter 34 and/or the motor inverter 52, power may in particular be converted with respect to its voltage and/or with respect to its current, for example from a low-voltage to a high voltage, and/or between alternating current and direct current, and respectively vice versa.

As further shown in Fig. 1, the electrical power supply grid 20 or the HV bus 21 may be connected to one or more low-voltage consumers 54. The one or more low-voltage consumers 54 may particularly include a low-voltage converter 55, and/or a low-voltage power storage 56, and/or a low-voltage bus 57 for connecting one or more low-voltage consumer units to the electrical power supply grid 20, particularly to the HV bus 21, for example via the one or more low-voltage converters 55.

As indicated in Fig. 1, an aircraft propulsion system 12 may particularly include the system 10 for electrically powering electrical consumers of an aircraft, which in turn includes one or more power train systems 15. The aircraft propulsion system 12 may further particularly include an aircraft propulsion system 51, for electrically powering a non-combustive aircraft propulsion unit.

In exemplary embodiments, the system 10 for electrically powering electrical consumers of an aircraft and/or the aircraft propulsion system 12 may include one or more low-voltage consumers 54. The one or more low-voltage consumers 54 may particularly include non-propulsive electrical consumers, such as on-board entertainment systems, navigation systems, electrical steering systems, cooking stations, actuators for controlling an elevator unit and/or a vertical tail of the aircraft, one or more electrical consumers in the cabin, and/or other non-propulsive electrical consumers.

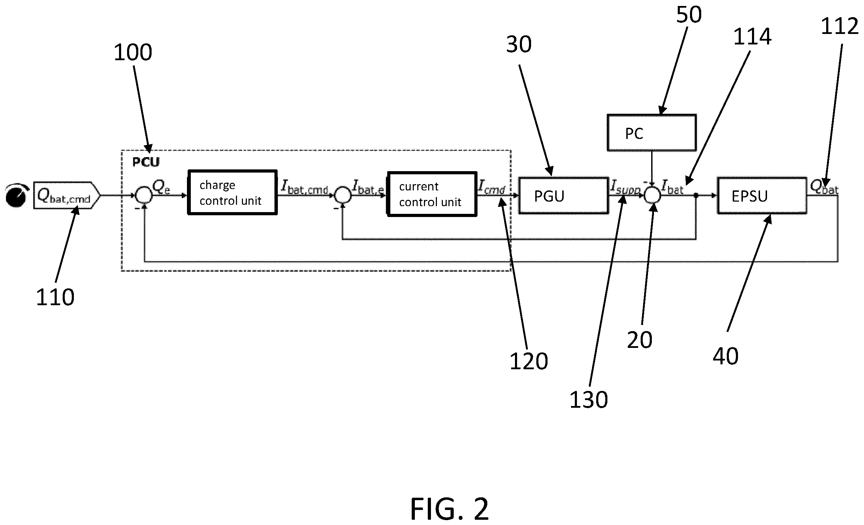

The power train system 15 of an aircraft as mentioned herein generally comprises the electrical power supply grid 20 and at least a power train control unit 100 which is described with reference to Fig. 2 hereinbelow, however which is not shown in Fig. 1. The power train system 15 of an aircraft may particularly further includes at least one power generation unit 30, at least one electrical storage unit 40 and/or at least one power consumer 50.

As further indicated in Fig. 1, at least one connector 28 particularly having one or more integrated jumpers may be positionable (e.g. pluggable and unpluggable) with respect to the electrical power supply grid 20 for (particularly temporarily or releasably) connecting an external power supply 60 and/or an external power supply mains with the electrical power supply grid 20. As shown in Fig. 1, the connector 28 particularly having one or more integrated jumpers may particularly be positionable (e.g. pluggable) between the power generator 32 and the HV DC/DC converter 34 connected thereto, as well as unpluggable therefrom.

In particular embodiments, the connector 28 which particularly includes one or more integrated jumpers may be positionable, e.g. pluggable, to an intermediate-voltage bus 33, which may be configured to electrically connect to power generator 32 to the HV DC/DC converter 34, particularly to temporarily or releasably connect the external power supply 60 with the electrical power supply grid 20.

However, and even though not shown in Fig. 1, the connector 28 which particularly includes one or more integrated jumpers may also be alternatively or additionally configured as positionable (e.g. pluggable) to the electrical power supply grid 20 and unpluggable from the electrical power supply grid 20, for example at a portion of the electrical power supply grid 20 which connects the power generation unit 30 with the rest of the electrical power supply grid 20.

Particularly, the connector 28 which particularly includes one or more integrated jumpers may be a plug, a connector, an operable switch, an operable knob or the like and particularly be removably connectable to the electrical power supply grid 20. Specifically, the connector 28 which particularly includes one or more integrated jumpers may be configured to connect the power generation unit 30 and/or the power generator 32 with the electrical power supply grid 20, when the connector 28 is in the plugged state.

The power generation unit 30 and/or the power generator 32 may be connected to the electrical power supply grid 20 for example via a power generation contact which the connector 28 closes in its plugged state, so as to electrically connect the power generation unit 30 and/or the power generator 32 to the electrical power supply grid 20. When being in the plugged state, the connector 28 is configured to block an external power supply plug, such that in the plugged state of the connector 28, an external power supply 60 and/or an external power supply mains 61 cannot be plugged to the extern power supply plug. That is, in the plugged state, the connector 28 is configured to block a connection of the external power supply 60 and/or an external power supply mains 61 with the electrical power supply grid 20.

In turn, when the connector 28 which particularly includes one or more integrated jumpers is in the unplugged state, the power generation unit 30 and/or the power generator 32 may be disconnected from the electrical power supply grid 20 for example via an open power generation contact which the connector 28 does not close in its unplugged state, such that the power generation unit 30 and/or the power generator 32 is electrically disconnected from the electrical power supply grid 20.

However, when being in the unplugged state, the connector 28 particularly is configured to unblock the external power supply plug (not shown in Fig. 1), such that in the unplugged state of the connector 28, the external power supply 60 can be plugged to the extern power supply plug and therefore particularly be connected to the electrical power supply grid 20, as well as to the electrical power storage unit 40, and/or to the power consumer 50, respectively connected to the electrical power supply grid 20.

In the particular case when the power generation unit 30 includes one or more fuel cells, the connector 28 is particularly configured to prevent a supply of a potential damaging current to the one or more fuel cells.

The electrical power storage unit 40 as shown in Fig. 1 may particularly include at least one battery, at least one accumulator, and/or any other suitable unit(s) for particularly storing electric power.

The power generator 32 as shown in Fig. 1 may particularly include one or more fuel cells, particularly hydrogen fuel cells, or one or more other suitable units for particularly generating electric power, such as combustion units, for example.

The system 10 for electrically powering electrical consumers of an aircraft may include one or more structures of a power train system 15 as indicated in Fig. 1. That is, the system 10 for electrically powering electrical consumers of an aircraft particularly may include a plurality of electric power supply grids 20 and a corresponding plurality of power train control units 100. In said case, each electrical power supply grid 20 of the plurality of power supply grids 20, and/or each power train control unit 100 of the plurality of power train control units 100 may particularly be disconnected from one another, particularly communicatively disconnected from one another and/or electrically disconnected from one another. This advantageously provides for a decentralized structure of the system 10 for electrically powering electrical consumers of an aircraft, for independently controlling a plurality of separate power trains of an aircraft.

In some embodiments, the system 10 for electrically powering electrical consumers of an aircraft may include one independent power train per electric aircraft propulsion unit to be powered, or per pair of electric aircraft propulsion units. An electric aircraft propulsion unit may particularly be one single electrically powered propeller, one single electrically powered turbojet, or the like.

Nevertheless, in alternative embodiments, the system 10 for electrically powering electrical consumers of an aircraft may include a plurality of power trains, each power train having an electrical power supply grid 20 connected to an electrical power storage unit 40, wherein the electrical power storage unit 40 connected to a first power train system 15 may for example be electrically and/or communicatively connected to one or more power storage units 40 connected to further power trains, for example via a cross-feed. This provides for an advantageous power management, wherein a risk of overcharge and/or deep discharge of the electrical power storage units 40 can be reduced or prevented.

**Fig. 2** shows a control diagram for controlling a system 10 for electrically powering electrical consumers of an aircraft according to an embodiment of the present invention. The control diagram as shown in Fig. 2 may particularly illustrate a control mechanism of the system 10 as shown in Fig. 1, particularly by the power train control unit 100 (not shown in Fig. 1) of the power train system 15. Similar to Fig. 1, also Fig. 2 indicates an electric power supply grid 20 to which the power generation unit 30 ("PGU" in Fig. 2), the electrical power storage unit 40 ("EPSU" in Fig. 2) and/or the power consumer 50 ("PC" in Fig. 2) are respectively connected to.

Furthermore, as shown in Fig. 2, the power train control unit 100 ("PCU" in Fig. 2) which is indicated with dotted lines may particularly be communicatively connected to the power generation unit 30, to the electrical power storage unit 40, and/or to the electrical power supply grid 20.

As shown in Fig. 2, the power train control unit 100 may particularly be configured to receive one or more input variables. Said one or more input variables may particularly be reflective of a target state of charge 110 of the electrical power storage unit 40, indicated as "Q_{bat,cmd}" in Fig. 2. Said target state of charge 110 may particularly include or be a target state of charge or a target charge level of the electrical power storage unit 40. In exemplary embodiments, the target state of charge may be a ratio or percentage of a maximum state of charge of the electrical power storage unit at a predetermined state or time of the electrical power storage unit 40. In alternative embodiments, the target state of charge may be a ratio or percentage of a maximum state of charge of the electrical power storage unit 40 at a present state or time of the electrical power storage unit 40, such as for example at a used state of the electrical power storage unit 40 which the electrical power storage unit 40 is in due to prior flights of the aircraft, for example, and therefore take a certain degradation of a maximum storable state of charge into account.

The target state of charge 110 may particularly be configured as adjustable by a pilot of the aircraft and/or be configured as depending on a flight state of the aircraft, which advantageously allows for automatic or passive differentiating between take-off, cruise and landing of the aircraft. Such differentiation may allow the system 10 for electrically powering electrical consumers of an aircraft to be more flexible with respect to different flight states or flight situations, which particularly require different ratios of a maximum available thrust. A respective ratio of a maximum available thrust may in turn particularly require or demand a power supply which may exceed a maximum power which the power generation unit 30 is configured to generate.

A first input variable of the at least one input variables, which is configured to be received by the power train control unit 100 in order to control a power 114 supplied to the electrical power storage unit 40 on the basis thereof, may particularly be reflective of and/or correspond to the target state of charge 110 of the electrical power storage unit 40.

The one or more input variables which the power train control unit 100 is configured to receive may further particularly be reflective of a state of charge 112 of the electrical power storage unit 40, indicated as "Q_{bat}" in Fig. 2. Said state of charge 112 may particularly be an actual state of charge of the electrical power storage unit 40, and may further particularly be a measured, determined or estimated state of charge of the electrical power storage unit 40. The state of charge 112 may particularly include or be a state of charge or charge level of the electrical power storage unit 40.

A second input variable of the at least one input variables, which is configured to be received by the power train control unit 100 in order to control a power 114 supplied to the electrical power storage unit 40 on the basis thereof, may particularly be reflective of, correspond to, and/or be the state of charge 112 of the electrical power storage unit 40.

The one or more input variables which the power train control unit 100 is configured to receive may further particularly be reflective of a power 114 received from or supplied to the electrical power storage unit 40, which is indicated as "I_{bat}" in Fig. 2. Said power 114 may particularly be an actual power which the electrical power storage unit 40 is configured to supply to the electrical power supply grid 20, or which the electrical power storage unit 40 is configured to receive from the electrical power supply grid 20.

The power 114 may particularly be a measured, determined or estimated power supplied to or received from the electrical power storage unit 40, and may for example be measured at the electrical power supply grid 20, in particular at a portion of the electrical power supply grid 20 adjacent the electrical power storage unit 40. The power 114 may particularly include or be a charging or discharging current which the electrical power storage unit 40 is configured to receive or supply.

A third input variable of the at least one input variables, which is configured to be received by the power train control unit 100 in order to control a power 114 to be supplied to the electrical power storage unit 40 on the basis thereof, may particularly be reflective of, correspond to, or be the power 114 which the electrical power storage unit 40 is configured to supply or receive.

As shown in Fig. 2, within the area of the dashed lines indicating the power train control unit 100, the power train control unit 100 may in particular include one or more subunits communicatively connected to one another, particularly a charge control unit and/or a current control unit.

The charge control unit of the power train control unit 100 may be a subunit of the power train control unit 100. The charge control unit may be configured to receive one or more input variables particularly reflective of a state of charge or charge level of the electrical power storage unit 40 and/or to receive a target state of charge or target charge level of the electrical power storage unit 40.

The current control unit of the power train control unit 100 may be another subunit of the power train control unit 100. The current control unit may be configured to receive one or more input variables particularly reflective of a charging or discharging current supplied to or received from the electrical power storage unit 40 and/or to receive a current command of a power, particularly a current, to be supplied to or to be received from the electrical power storage unit 40 as determined and/or calculated by the charge control unit.

The power train control unit 100, particularly the charge control unit of the power train control unit 100 may be configured to determine or calculate a certain power to be supplied to or to be received from the electrical power storage unit 40. The certain power to be supplied to or to be received from the electrical power storage unit 40 is indicated as "I_{bat,cmd}" in Fig. 2.

The power train control unit 100 as indicated in Fig. 2 is particularly configured to determine or calculate the certain power to be supplied to or to be received from the electrical power storage unit 40 on the basis of an input variable which is reflective of the target state of charge 110 of the electrical power storage unit 40, and/or of an input variable which is reflective of the state of charge 112 of the electrical power storage unit 40.

The certain power to be supplied to or to be received from the electrical power storage unit 40 as determined or calculated on the basis of the input variable which is reflective of the target state of charge 110 of the electrical power storage unit 40, and/or of the input variable which is reflective of the state of charge 112 of the electrical power storage unit 40 may particularly be determined or calculated using a P, I, PI, PD or PID controller.

In further particular embodiments, the power train control unit 100 may be configured to (particularly exclusively) receive the first input variable being reflective of the target state of charge 110 of the electrical power storage unit 40, the second input variable being reflective of the state of charge 112 of the electrical power storage unit 40 and the third input variable being reflective of the power 114 which the electrical power storage unit is configured to supply or receive, in order to calculate or determine the power 114 which shall be supplied to the electrical power storage unit 40. The power 120 to be generated by the power generation unit 30, indicated as "I_{cmd}" in Fig. 2, may particularly be determined passively, by the physical demand of the HV DC/DC converter 34 connected to the electrical power supply grid 20. Thus, a direct communication between the power train control unit 100 and the power generator 32 of the power generation unit 30 can advantageously be omitted.

Specifically, the current control unit of the power train control unit 100 may be configured to determine or calculate a power 114 which is to be supplied to the electrical power storage unit 40 on the basis of the certain power "Ibat,cmd" which shall be supplied to or be received from the electrical power storage unit 40, as calculated and/or determined by the charge control unit, and of the power 114 which the electrical power storage unit 40 is configured to supply or receive. The said certain power "Ibat,cmd" may particularly be communicated within the power train control unit 100, particularly from the charge control unit to the current control unit of the power train control unit 100, in order to determine and/or output a power 114 which is to be supplied to the electrical power storage unit 40, i.e. to determine and/or output a power 114 which the power train control unit 100 controls the connection between the electrical power supply grid 20 and the electrical power storage unit 40 to supply to the electrical power storage unit 40.

The power 114 to be supplied to the electrical power storage unit 40 as determined or calculated on the basis of the input variable which is reflective of the target state of charge 110 of the electrical power storage unit 40, of the input variable which is reflective of the state of charge 112 of the electrical power storage unit 40, and of the input variable which is reflective of the power 114 supplied to or received from the electrical power storage unit 40 may particularly be determined or calculated using a P, I, PI, PD or PID controller.

The power 114 to be supplied to the electrical power storage unit 40 may be output as at least one control command by the power train control unit 100, in particular by the current control unit of the power train control unit 100, to the connection between the electrical power supply grid 20 and the electrical power storage unit 40. The power generation unit 30 may then be passively controlled by the electrical power supply grid 20, by passively demanding the power 120 to be supplied to the electrical power supply grid 20, particularly via the HV DC/DC converter 34.

In particular embodiments, the power train control unit 100, particularly the current control unit of the power train control unit 100, may be configured to limit the power 114 to be supplied to the electrical power storage unit 40 on the basis of the input variable which is reflective of the target state of charge 110 of the electrical power storage unit 40, of the input variable which is reflective of the state of charge 112 of the electrical power storage unit 40, and of the input variable which is reflective of the power 114 supplied to or received from the electrical power storage unit 40 in a foregoing control step of the power train control unit 100.

The power generation unit 30 may particularly be configured to passively determine the power 120 to be supplied to the electrical power supply grid 20.

The power generation unit 30, particularly the power generator 32 of the power generation unit 30 may particularly be configured to generate power on the basis of the passive demand for generating power by the HV DC/DC converter 34 and supply the generated power to the electrical power supply grid 20, particularly to supply the generated power to the HV DC/DC converter 34, convert the power into power at a higher voltage and supply the power to the electrical power supply grid 20.

The power 130 supplied to the electrical power supply grid 20 by the power generation unit 30 is indicated as "Iₛᵤₚₚ" in Fig. 2. The power generated by the power generation unit 30 may underly a time shift, due to internal friction of the power generation unit 30, and/or due to other particular mechanisms in the power generation unit 30 or disturbances to the power generation unit 30.

Specifically, during a ramp-up phase of the power generation unit 30, the power 130 produced and supplied to the electrical power supply grid 20 may be lower than the power 120 which the electrical power supply grid 20 passively demands from the power generation unit 30 to generate.

As indicated in Fig. 2, the power consumer 50 is configured to receive power from the electrical power supply grid 20. As the power consumer 50 may generally relate to a plurality of different particularly electrical consumers which again may have different power consumption depending on a flight state or flight situation, control of the power train is simplified by treating the power supplied to the power consumer 50 as an unknown, particularly as a disturbance to the electrical power supply grid 20. Therefore, the power train system 15 advantageously provides for efficiently securing a power supply to the power consumer 50, without having to in detail monitor and/or feed back each power consumption or power demand of the power consumer 50.

Depending on whether the power 130 supplied by the power generation unit 30 to the electrical power supply grid 20 is greater than or lower than the disturbance caused to the electrical power supply grid 20 by the power consumer 50, power is supplied to or received from the electrical power storage unit 40, which therefore is configured to work as a power buffer for the electrical power supply grid 20, or as a secondary or passive power supply for the electrical power supply grid 20.

Specifically, in case the power 130 supplied to the electrical power supply grid 20 by the power generation unit 30 is greater than the power supplied to the power consumer 50 by the electrical power supply grid 20, power 114 is supplied to the electrical power storage unit 40. However, the power 114 supplied to the electrical power storage unit 40 is advantageously controlled, and optionally particularly limited, by the power train control unit 100, in order to on the one hand, ensure sufficient power supply to the power consumer 50, and on the other hand, to prevent possible damage to the electrical power storage unit 40, due to too high charging currents, for example.

Furthermore, in case the power 130 supplied to the electrical power supply grid 20 by the power generation unit 30 is lower than the power supplied to the power consumer 50 by the electrical power supply grid 20, power 114 particularly is supplied to the electrical power supply grid 20, and therefrom particularly to the power consumer 50, by the electrical power storage unit 40.

Depending on the power 114 which is received from or supplied to the electrical power storage unit, the state of charge 112 of the electrical power storage unit 40 changes accordingly. Said power 114 and said state of charge 112 can then be determined, estimated and/or measured as respective input variable(s) reflective thereof, and then be received by the power train control unit 100.

Accordingly, the system 10 for electrically powering electrical consumers of an aircraft with the power train control unit 100 being configured to control the power 114 to be supplied to the electrical power storage unit 40 as explained in accordance with Fig. 2 advantageously provides for a system for efficiently and sufficiently powering electrical consumers of an aircraft.

The power train control unit 100 particularly calculates the current (I_{bat,cmd}) required to maintain the target state of charge 110 while respecting the current limits, particularly the power limits, for charging and discharging the electrical power storage unit 40, for example the battery. The power train control unit 100 particularly calculates a current command (I_{cmd}) to maintain the battery current (I_{bat,cmd}) while respecting the physical characteristics of the PGU 30 i.e. the PGU only provides positive current, respectively can only supply current. The PGUs 30 interface to the power supply grid 20, particularly a high-voltage grid, particularly is the HV DC/DC 34, which receives I_{cmd} and draws current from the power generator 32, particularly from one or more fuel cells. The HV DC/DC 34 particularly operates within limits given by the power generator 32, particularly by the one or more fuel cells of the power generator 32, wherein the limits particularly include current, current rate, and/or voltage, and wherein the limits may additionally or alternatively include limits given by the power supply grid 20, particularly given by the high-voltage grid, wherein the limits particularly include current, and/or voltage. The power generator 32, particularly the one or more fuel cells of the power generator 32, itself passively follows the current drawn from the power generator 32, and particularly from the one or more fuel cells, such that the power generator 32, and particularly its one more fuel cells, maintains itself to operate within its operational limits.

In case of a failure, particularly at the power generation unit 30, and/or at the electrical power storage unit 40, the dynamic and limits at the power consumer may particularly be reduced to save operating ranges and/or flight ranges ensuring stable operation of the components left. Drawing power in a save range is achieved by limiting the throttle command to the power consumer 50, particularly the electric aircraft propulsion system 51. The operation status may be distributed via discrete signals.

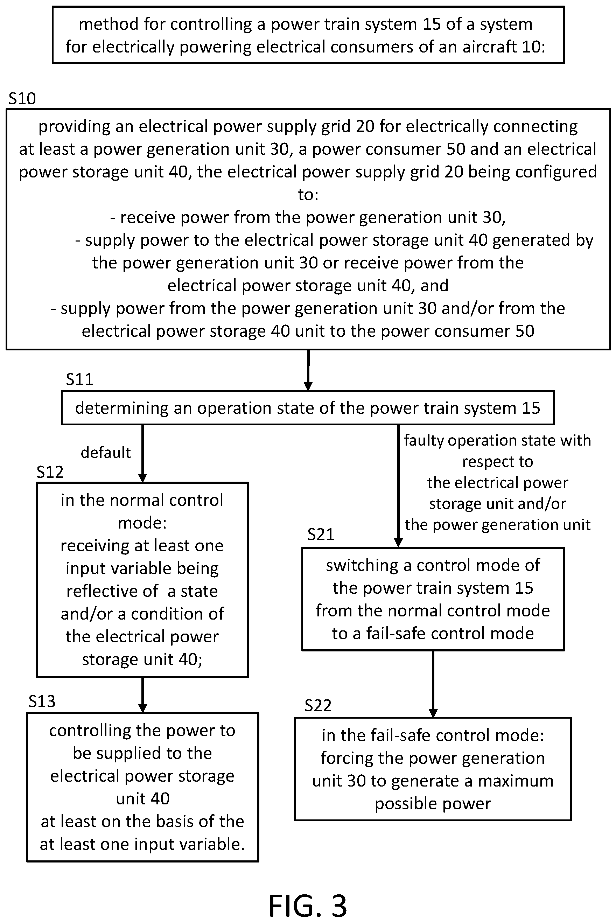

**Fig. 3** shows a flowchart of an exemplary method for controlling a system 10 for electrically powering electrical consumers of an aircraft, the system 10 particularly being in accordance with the system 10 as illustrated and described with respect to Figs. 1 and 2, the method comprising the steps of:
S10: providing an electrical power supply grid 20 for electrically connecting at least a power generation unit 30, a power consumer 50 and an electrical power storage unit 40, the electrical power supply grid 20 being configured to:
   - receive power from the power generation unit 30,
   - supply power to the electrical power storage unit 40 generated by the power generation unit 30 or receive power from the electrical power storage unit 40, and
   - supply power from the power generation unit 30 and/or from the electrical power storage unit 40 to the power consumer 50;
S11: determining an operation state of the power train system 15;
   wherein per default:
S12: in a normal control mode: receiving at least one input variable being reflective of a state of charge 112 of the electrical power storage unit 40;
S13: controlling the power 114 to be supplied to the electrical power storage unit 40 at least on the basis of the at least one input variable;
   and wherein in case of determining a faulty operation state with respect to the electrical power storage 40 unit and/or the power generation unit 30:
S21: switching a control mode of the power train system 15 from the normal control mode to a fail-safe control mode;
S22: in the fail-safe mode: forcing the power generation unit 30 to generate a maximum possible power.

In other words, Fig. 3 shows a flowchart of an exemplary method for controlling a system 10, particularly according to Figs. 1 and 2, for electrically powering electrical consumers of an aircraft. The system 10 may particularly include the power train system 15 according to Figs. 1 and 2.

The method as illustrated in Fig. 3 particularly starts with step S10 of providing an electrical power supply grid 20 for electrically connecting at least a power generation unit 30, a power consumer 50 and an electrical power storage unit 40. As further illustrated with step S10 in Fig. 3, the electrical power supply grid 20 which is configured to electrically connect at least the power generation unit 30, the power consumer 50 and the electrical power storage unit 40 is particularly configured to receive power from the power generation unit 30, to supply power to the electrical power storage unit 40 generated by the power generation unit 30 or receive power from the electrical power storage unit 40, and to supply power from the power generation unit 30 and/or from the electrical power storage unit 40 to the power consumer 50.

As indicated by step S11 in Fig. 3, the method further includes a step of determining an operation state of the power train system 15. Said step S11 of step of determining an operation state of the power train system 15 may particularly include determining an operation state of the electrical power storage unit 40 and/or of the power generation unit 30.

In case no faulty operation state of the power train system 15 is determined, that is in case no faulty operation state with respect to the electrical power storage unit 40 and/or with respect to the power generation unit 30 is determined, the power train control unit 100 of the power train system 15 may particularly be configured to operate according to a first control mode. The first control mode may particularly be a normal control mode of the power train system 15. The normal control mode may particularly be set per default. However, the normal control mode may also be a control mode to be switched to, in case a control mode not corresponding to the normal control mode would be determined in one or more foregoing iterations and/or timesteps.

In case the normal control mode is determined or set, that may generally be set per default and in case no faulty operation state is determined, the method may particularly include step S12 as shown in Fig. 3 of receiving at least one input variable being reflective of a state and/or a condition of the electrical power storage unit 40. That is, in case no faulty operation state is determined, the power train control unit 100 may particularly be configured to receive at least input variable particularly being reflective of the state and/or the condition of the electrical power storage unit 40. In some embodiments, step S12 may particularly include receiving at least one input variable which is particularly or even only reflective of a target state of charge 110 of the electrical power storage unit 40, a measured state of charge 112 of the electrical power storage unit 40, and a charging or discharging current 114 supplied to or received from the electrical power storage unit 40, respectively.

Upon receiving the at least one input variable, the method as illustrated in Fig. 3 further particularly includes step S13 of controlling the power 114 to be supplied to the electrical power storage unit 40 at least on the basis of the at least one input variable. Said step S13 of controlling the power 114 to be supplied to the electrical power storage unit 40 at least on the basis of the at least one input variable may particularly further include a step of determining or calculating power 114 to be supplied to the electrical power storage unit 40 of the first power train system 15, wherein the power 114 to be supplied to the electrical power storage unit 40 is determined or calculated on the basis of the received at least one input variable being reflective of the state and/or the condition of the electrical power storage unit 40, and/or a step of providing a power supply command to the connection between the electrical power supply grid 20 and the electrical power storage unit 40 for supplying power to the electrical power storage unit 40, determined or calculated on the basis of the received at least one input variable being reflective of the state and/or the condition of the electrical power storage unit 40.

In the normal control mode, the power 120 to be generated by the power generation unit 30 and then supplied to the electrical power supply grid 20 as power 130 may particularly be passively demanded by the electrical power supply grid 20, particularly via the HV DC/DC converter 34.

However, in case a faulty operation state of the power train system 15 is determined, that is in case a faulty operation state with respect to the electrical power storage unit 40 and/or of the power generation unit 30 is determined, the method as illustrated in Fig. 3 may particularly include step 21 of switching a control mode of the power train system 15 from the first control mode of the power train system 15, which may particularly correspond to the normal control mode of the power train system 15, to a second control mode of the power train system 15, which may particularly correspond to a fail-safe control mode of the power train system 15.

Switching to the second control mode which may particularly correspond to the fail-safe control mode of the power train system 15 may particularly be configured as a passive or automatic switching, i.e. wherein no particularly triggering command to or from the power train control unit 100 is necessary for triggering the switching.

After switching to the second control mode which may particularly correspond to the fail-safe control mode of the power train system 15, the method may particularly be configured to perform step S22 as shown in Fig. 3 of forcing the power generation unit 30 to generate a maximum possible power. Specifically, step S22 may particularly include forcing the power generation unit 30 to at least temporarily generate a maximum possible power.

However, step S22 may alternatively or additionally particularly include forcing the power generation unit 30 to generate power while allowing a degradation of the power generation unit 30. The degradation of the power generation unit 30 when controlled in the second control mode may be configured as a degradation to an extent which makes the power generation unit 30 unusable for further flights and/or which forces the aircraft including the power train system 15 to land within a predetermined period of time.

The aforementioned steps as illustrated by Fig. 3 and as explained on the basis thereof, as well as the control mechanisms as illustrated by Figs. 1 and 2 and as explained on the basis thereof may particularly be programmed as the computer program product as mentioned herein. Specifically, the power train control unit 100 of the power train system 15 may be a suitable system for performing the aforementioned steps and control mechanisms, particularly when loading and executing the computer program product on the power train control unit 100.

### List of Reference Numerals

- 10: system (for electrically powering electrical consumers of an aircraft)
- 12: aircraft propulsion system
- 15: power train system (of an aircraft)
- 20: electrical power supply grid
- 21: high-voltage bus (HV bus)
- 28: connectorconnector
- 30: power generation unit
- 32: power generator
- 33: intermediate-voltage bus
- 34: HV DC/DC converter
- 40: electrical power storage unit
- 50: power consumer
- 51: electric aircraft propulsion system
- 52: motor inverter
- 53: electric motor
- 54: low-voltage consumer
- 55: low-voltage converter
- 56: low-voltage power storage
- 57: low-voltage bus
- 60: external power supply
- 61: external power supply mains
- 100: power train control unit
- 110: target state of charge (of the electrical power storage unit 40)
- 112: state of charge (of the electrical power storage unit 40)
- 114: power (received from or supplied to the electrical power storage unit 40)
- 120: power (to be generated by the power generation unit 30)
- 130: power (supplied to the electrical power supply grid 20)
- S10-S14: steps for controlling a power train system of a system for electrically powering electrical consumers of an aircraft
- S21-S22: steps for controlling a power train system of a system for electrically powering electrical consumers of an aircraft according to a fail-safe control mode

## Claims

1. System (10) for electrically powering electrical consumers of an aircraft, the system (10) comprising a first power train system (15) of an aircraft, the first power train system (15) comprising:
- an electrical power supply grid (20) for electrically connecting at least a power generation unit (30), a power consumer (50) and an electrical power storage unit (40), wherein the electrical power supply grid (20) is configured to:
- receive power from the power generation unit (30),
- supply power to the electrical power storage unit (40) generated by the power generation unit (30) or receive power from the electrical power storage unit (40), and
- supply power from the power generation unit (30) and/or from the electrical power storage unit (40) to the power consumer (50); and
- a power train control unit (100) configured to receive at least one input variable being reflective of a state and/or a condition of the electrical power storage unit (40) and to control the power (114) supplied to the electrical power storage unit (40) at least on the basis of the at least one input variable.

2. System (10) for electrically powering electrical consumers of an aircraft according to claim 1, wherein the state and/or the condition of the electrical power storage unit (40) includes a target state of charge (110) of the electrical power storage unit (40), a measured state of charge (112) of the electrical power storage unit (40), and/or a charging or discharging current (114) supplied to or received from the electrical power storage unit (40), respectively.

3. System (10) for electrically powering electrical consumers of an aircraft according to claim 1, wherein the state and/or the condition of the electrical power storage unit (40) is exclusively reflective of a target state of charge (110) of the electrical power storage unit (40), a measured state of charge (112) of the electrical power storage unit (40), and a charging or discharging current (114) supplied to or received from the electrical power storage unit (40), respectively.

4. System (10) for electrically powering electrical consumers of an aircraft according to any one of the preceding claims, wherein in case the power which the electrical power supply grid (20) is configured to receive from the power generation unit (30) is greater than the power which the electrical power supply grid is configured to supply to the power consumer (50), the electrical power supply grid (20) is configured to supply power (114) to the electrical power storage unit (40), and/or
wherein in case the power which the electrical power supply grid (20) is configured to supply to the electrical power consumer (50) is greater than the power which the electrical power supply grid (20) is configured to receive from the power generation unit (30), the electrical power supply grid (20) is configured to receive power (114) from the electrical power storage unit (40).

5. System (10) for electrically powering electrical consumers of an aircraft according to any one of the preceding claims, wherein the first power train system (15) comprises a first control mode and a second control mode,
wherein when in the second control mode, the power generation unit (30) is forced to supply power to the electrical power supply grid (20) while allowing a degradation of the power generation unit. (30)

6. System (10) for electrically powering electrical consumers of an aircraft according to any one of the preceding claims, further including a connector (28), wherein the connector (28) has a plugged state with respect to the electrical power supply grid (20) and an unplugged state with respect to the electrical power supply grid (20),
wherein when in the plugged state, the connector (28) is configured to physically block a connection of the electrical power supply grid (20) with an external power supply (60), and
wherein when in the unplugged state, the connector (28) is configured to physically allow the connection of the electrical power supply grid (20) with the external power supply (60) while electrically disconnecting the power generation unit (30) from the electrical power supply grid (20).

7. System (10) for electrically powering electrical consumers of an aircraft according to any one of the preceding claims, wherein the power generation unit (30) comprises a fuel cell; and/or
wherein the power consumer (50) comprises an electric motor, the electric motor preferably being configured to power a propulsion unit of the aircraft; and/or
wherein the electrical power storage unit (40) comprises a battery.

8. System (10) for electrically powering electrical consumers of an aircraft, the system (10) comprising the first power train system (15) and a second power train system (15),
wherein the first power train system (15) and the second power train system (15) are electrically separated from one another.

9. Aircraft propulsion system (12) comprising:
a system (10) for electrically powering electrical consumers of an aircraft, according to any one of the claims 1 to 8, and
a power consumer (50) including an electric aircraft propulsion system (51),
wherein the power consumer (50) is electrically connected to the electrical power supply grid (20).

10. Method for controlling a first power train system (15) of a system (10) for electrically powering electrical consumers of an aircraft, the method comprising the steps of:
- (S10) providing an electrical power supply grid (20) for electrically connecting at least a power generation unit (30), a power consumer (50) and an electrical power storage unit (40), the electrical power supply grid (20) being configured to:
-- receive power from the power generation unit (30),
-- supply power (114) to the electrical power storage unit (40) generated by the power generation unit (30) or receive power (114) from the electrical power storage unit (40), and
-- supply power from the power generation unit (30) and/or from the electrical power storage unit (40) to the power consumer (50);
- (S12) receiving at least one input variable being reflective of a state and/or a condition (112) of the electrical power storage unit (40); and
- (S13) controlling the power (114) supplied to the electrical power storage unit (40) at least on the basis of the at least one input variable.

11. Method for controlling a first power train system (15) of a system (10) for electrically powering electrical consumers of an aircraft according to claim 10, wherein the method further comprises the steps of:
- providing a target state of charge (110) of the electrical power storage unit (40);
- measuring a state of charge (112) of the electrical power storage unit (40); and/or
- measuring a charging or discharging current (114) which is supplied to or received from the electrical power storage unit (40); and
- determining the power (114) to be supplied to the electrical power storage unit (40) on the basis of a first input variable being reflective of the provided target state of charge (110) of the electrical power storage unit (40), a second input variable being reflective of the measured state of charge (112) of the electrical power storage unit (40), and/or a third input variable being reflective of the measured charging or discharging current (114) which is supplied to or received from the electrical power storage unit (40), respectively.

12. Method for controlling a first power train system (15) of an aircraft according to claim 10 or 11, the method further comprising the step of:
- (S21) switching a control mode of the first power train system (15) from a first control mode to a second control mode, in case a faulty operation state of the electrical power storage unit (40) and/or of the power generation unit (30) is determined;
-- wherein when in the second control mode of the first power train system (15), the method further comprises the step of:
- (S22) forcing the power generation unit (30) to generate a maximum possible power,
wherein the method for controlling a first power train system (15) of an aircraft optionally further comprises the step of:
- (S11) determining an operation state of the electrical power storage unit (40), and/or of the power generation unit (30);
-- wherein the faulty operation state of the electrical power storage unit (40) and/or of the power generation unit (30) is determined:
--- in case the electrical power storage unit (40) is disconnected from the electrical power supply grid (20), and/or
--- in case no state of charge (112) of the electrical power storage unit (40) is measurable or determinable; and/or
--- in case no power (114) to be supplied to or received from the electrical power storage unit (40) is measurable or determinable; and/or
--- in case a communication error between the electrical power storage unit (40) and a power train control unit (100) is determined or detected; and/or
--- in case a communication error between the power train control unit (100) and a converter (34) which is interconnected between the power train control unit (100) and a power generator (32) of the power generation unit (30) is determined or detected.

13. Method for controlling a first power train system (15) of an aircraft according to any one of the claims 10 to 12, wherein the step of controlling the power (114) supplied to the electrical power storage unit (40) at least on the basis of the at least one input variable includes the steps of:
- determining or calculating power (114) to be supplied to the electrical power storage unit (40) of the first power train system (15),
-- wherein the power (114) to be supplied to the electrical power storage unit (40) is determined or calculated on the basis of the received at least one input variable being reflective of the state and/or condition of the electrical power storage unit (40); and
- providing a power supply command to a connection between the electrical power supply grid (20) and the electrical power storage unit (40) for supplying power to the electrical power storage unit (40) determined or calculated on the basis of the received at least one input variable being reflective of the state and/or the condition of the electrical power storage unit (40).

14. Method for controlling a first power train system (15) of an aircraft according to any one of the claims 10 to 13, wherein the received at least one input variable is exclusively reflective of a target state of charge (110) of the electrical power storage unit (40), a measured state of charge (112) of the electrical power storage unit (40), and a charging or discharging current (114) supplied to or received from the electrical power storage unit (40), respectively.

15. Computer program product comprising computer-readable instructions which, when loaded and executed on a suitable system performs the steps of a method for controlling a first power train system (15) of a system (10) for electrically powering electrical consumers of an aircraft according to any one of the preceding claims 10 to 14.
